# EUROPEAN PATENT SPECIFICATION

(11) **EP 3 647 632 B1**
(45) Date of publication and mention of the grant of the patent: **31.07.2024**
(21) Application number: 18828632.2
(22) Date of filing: 18.06.2018
(51) Int. Cl.: F16J 15/3232, F16J 15/3244, F16J 15/3252, F16J 15/16, F16J 15/3204, F16J 15/3256, F16J 15/3264

(54) **SEAL DEVICE**
DICHTUNGSVORRICHTUNG
DISPOSITIF D'ÉTANCHÉITÉ

(30) Priority: 07.07.2017 JP 2017133866
(43) Date of publication of application: 06.05.2020
(73) Proprietor: NOK Corporation, Minato-ku Tokyo 105-8585 (JP)
(72) Inventor: YONAI Hisato, Fukushima-shi Fukushima 960-1193 (JP); SAKANO Yuya, Fukushima-shi Fukushima 960-1193 (JP)
(74) Representative: Weickmann & Weickmann PartmbB
(86) International application number: PCT/JP2018/023147
(87) International publication number: WO 2019/009053

(56) References cited:
- WO-A1-2016/158718
- WO-A1-2017/090583
- JP-A- 2002 372 059
- JP-A- 2004 125 176
- JP-A- 2006 342 871
- JP-A- 2009 103 142
- JP-A- 2015 194 174
- JP-A- 2016 148 386

## Description

### Technical Field

The present invention relates to a sealing apparatus and the present invention is a sealing apparatus for use in, for example, a motor vehicle-related field as a rotating seal, and particularly as an engine seal for an engine where lubricant exists inside the engine.

### Background Art

Conventionally, a sealing apparatus for use as an engine seal is mounted, for example, between an engine housing and a crankshaft in order to prevent lubricant sealed inside the engine from leaking to an exterior of the engine. In this sealing apparatus, a threaded part provided at a flange part of a slinger exhibits a pumping effect in rotation of the crankshaft to thereby seal up the lubricant inside the engine (for example, refer to Patent Literature 1). WO 2016/158718 A1 relates to a sealing device, according to independent claims 1 to 4, said sealing device being arranged to prevent leakage of sealed fluid when a rotating shaft is stationary by specifying angles (θ5, ϕin-θin) between an inner peripheral surface of a tip portion of a seal lip and an inner peripheral surface of a screw groove. WO 2017/090583 A1 refers to a sealing device in which a sealing lip slidably contacts with a sealing flange.

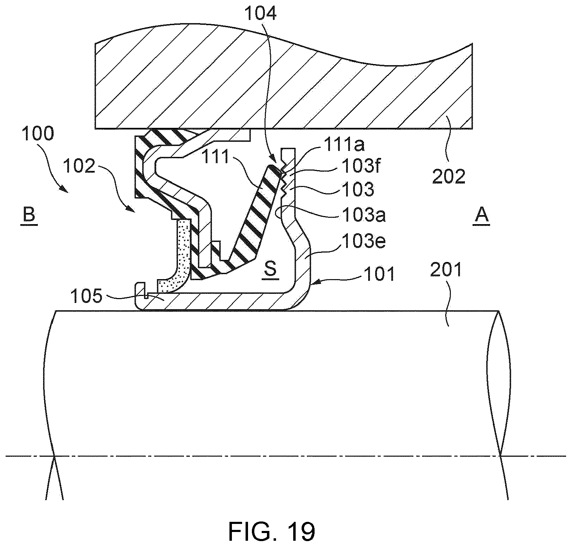

As illustrated in Fig. 19, a sealing apparatus 100 like the one described above includes a slinger 101 that is mounted on an outer peripheral surface of a crankshaft 201 as a rotational shaft so as to rotate together with the crankshaft 201 and a seal part 102 that is mounted on an inner peripheral surface of a housing 202.

The slinger 101 includes a cylindrical part 105 that is mounted on the outer peripheral surface of the crankshaft 201 and a flange part 103 that expands from an end part of the cylindrical part 105 on an interior A side towards an outer peripheral side thereof. The flange part 103 includes a protruding portion 103e having a hollow circular disc-like shape and protruding towards the engine interior A side, and a circular disc portion 103f having a hollow circular disc-like shape that is bent towards an engine exterior B side from an outer peripheral end part of the protruding portion 103e and then expands towards an outer peripheral side.

In this sealing apparatus 100, a main lip 111 of the seal part 102 contacts tightly and slidably an outer side surface 103a which is an engine exterior B side end face of the circular disc portion 103f of the flange part 103 in an axial direction, whereby the lubricant (oil) existing in the engine interior A is prevented from leaking to the engine exterior B.

In this sealing apparatus 100, a plurality of thread grooves 104 are provided on the outer side surface 103a of the circular disc portion 103f of the flange part 103 that the main lip 111 contacts tightly and slidably.

The thread grooves 104 are disposed independently of one another at constant intervals and are four equally disposed spiral grooves that advance clockwise from an inner diameter side towards an outside diameter side in accordance with a rotational direction of the crankshaft 201, respective initiating points and terminating points of the thread grooves differing from one another. The thread grooves 104 are formed on the outer side surface 103a of the circular disc portion 103f of the flange part 103 of the slinger 101, and a lip distal end 111a of the main lip 111 of the seal part 102 contacts the outer side surface 103a within a range of the four thread grooves 104.

Consequently, in the sealing apparatus 100, even though the lubricant oozes into a space S surrounded between the slinger 101 and a sealing member 110 of the seal part 102, a shaking off action of returning the lubricant from the space S to the engine interior A side by virtue of a centrifugal force of the flange part 103 when the slinger 101 rotates together with the crankshaft 201 and an action of returning the lubricant from the space S towards the engine interior A side by an effect of the thread grooves 104 when the circular disc portion 103f of the flange part 103 rotates (hereinafter, this action will also be referred to as a "thread action") can be provided. An effect of returning the lubricant from the space S towards the engine interior A side by both the shaking off action and the thread action is referred to as a pumping effect.

### Document List

### Patent Literature

Patent Literature 1: Japanese Patent Laid-Open No. 2014-129837;
Patent Literature 2: WO 2016/158718 A1; Patent Literature 3: WO 2017/090583 A1

### Summary of Invention

### Technical Problem

By the sealing apparatus 100 described above, in a diesel engine in which a crankshaft 201 rotates at lower speeds of, for example, 5000 RPM (revolutions per minute) or slower, there is no case where lubricant oozes from the gap between the flange part 103 of the slinger 101 and the lip distal end 111a of the main lip 111 into the space S.

However, when the sealing apparatus 100 is applied to a gasoline engine in which a crankshaft 201 revolves at higher speeds of, for example, 6000 rpm or faster, there having been fears that the lubricant oozes from the gap between the flange part 103 of the slinger 101 and the lip distal end 111a of the main lip 111 into the space S, and whereby the lubricant stays accumulated in the space S.

The present invention has been made in view of the problem described above, and it is an object of the present invention to provide a sealing apparatus that can prevent lubricant inside of an engine from oozing and eventually leaking from a gap between a flange part of a slinger and a main lip even when a rotational shaft rotates at high speeds at which a rotational speed is equal to or faster than a predetermined rotational speed.

### Solution to Problem

To achieve the above-described object, according to the present invention, there is provided a sealing apparatus characterized by including a slinger having a cylindrical part configured to be mounted on an outer peripheral surface of a rotational shaft that rotates relative to a housing and an annular flange part that extends from an inner end part of the cylindrical part in a direction that is perpendicular to an axis of the rotational shaft, and a seal part configured to be mounted on the housing and having a main lip configured to contact slidably a flat outer side surface of the flange part of the slinger to thereby seal lubricant inside an engine interior of the housing, and a groove configured to exhibit a discharging action of returning the lubricant to the engine interior side of the housing when the rotational shaft revolves is formed at a part on the outer side surface of the flange part that contacts the main lip, and a narrowing and miniaturizing structure configured to reduce a relative contact angle that is formed by the flange part and the main lip when the outer side surface of the flange part contacts the main lip is formed between the flange part and the main lip.

In the present invention, one embodiment of the sealing apparatus is characterized in that the contact angle (θ1) is 17 degrees or smaller, and the narrowing and miniaturizing structure is formed by combining an inclined flange part where the flange part of the slinger is inclined and by the main lip.

In the present invention, one embodiment of the sealing apparatus is characterized in that the narrowing and miniaturizing structure is formed by combining a curved flange part where the flange part of the slinger is curved and by the main lip.

In the present invention, one embodiment of the sealing apparatus is characterized in that the narrowing and miniaturizing structure is formed by combining a thin distal end part that is formed thinner in thickness than a main lip main body at a lip tip end side where the main lip contacts the outer side surface of the flange part and the slinger, the thin distal end part includes a curved surface and a thin outer peripheral surface, the curved surface constitutes a surface that is curved in an arc-like shape and that continues from an outer peripheral surface of the main lip to a distal-most end face that is an end surface at a distalmost end of the main lip, and the thin outer peripheral surface constitutes a surface that continues smoothly from the curved surface to the distal-most end face.

In the present invention, one embodiment of the sealing apparatus is characterized in that the narrowing and miniaturizing structure is formed by combining a distal end portion being a portion further on a lip tip end side than a cut-in part in the main lip that is brought into contact with the outer side surface of the flange part to bend by the cut-in part formed on a surface that defines the main lip in a position lying closer to the lip tip end side than the cut-in part and the main lip.

### Effects of Invention

According to the present invention, the sealing apparatus can be realized which can prevent the lubricant staying in the engine interior side from oozing and eventually leaking from the gap between the flange part of the singer and the main lip even though the rotational shaft rotates at high speeds at which the rotational speed of the rotational shaft is equal to or faster than the predetermined rotational speed.

### Brief Description of Drawings

[Fig. 1] A sectional view illustrating a state where an oil seal according to a first embodiment of the present invention is mounted.
[Fig. 2] An enlarged sectional view illustrating a configuration of the oil seal alone according to the first embodiment of the present invention.
[Fig. 3] A plan view illustrating a configuration of a slinger according to the first embodiment of the present invention.
[Fig. 4] Plan views illustrating other configuration examples of slingers according to the first embodiment of the present invention.
[Fig. 5] A sectional view for explaining a storage amount of lubricant in accordance with a contact angle between a conventional main lip and a conventional flange part of a slinger.
[Fig. 6] A plan view for explaining a storage amount of lubricant in accordance with a contact angle between a main lip and a flange part of a slinger in the oil seal according to the first embodiment of the present invention.
[Fig. 7] Graphs showing a relationship between a contact angle between the oil seal and the slinger according to the first embodiment of the present invention and an air suction amount of air containing the lubricant.
[Fig. 8] A sectional view illustrating a state where an oil seal according to a second embodiment of the present invention is mounted.
[Fig. 9] An enlarged sectional view illustrating a configuration of the oil seal alone according to the second embodiment of the present invention.
[Fig. 10] A plan view for explaining a storage amount of lubricant in accordance with a contact angle between a main lip and a flange part of a slinger in the oil seal according to the second embodiment of the present invention.
[Fig. 11] A sectional view illustrating a state where an oil seal according to a third embodiment of the present invention is mounted.
[Fig. 12] An enlarged sectional view illustrating a configuration of the oil seal alone according to the third embodiment of the present invention.
[Fig. 13] A plan view for explaining a storage amount of lubricant in accordance with a contact angle between a main lip and a flange part of a slinger in the oil seal according to the third embodiment of the present invention.
[Fig. 14] A sectional view with omitted lines illustrating a bending distance L between a center of a curved surface where a thin distal end part of the oil seal according to the third embodiment of the present invention bends and a distal-most end face.
[Fig. 15] A graph representing a relationship between a bending distance and an interference according to the third embodiment of the present invention.
[Fig. 16] A sectional view illustrating a state where an oil seal according to a fourth embodiment of the present invention is mounted.
[Fig. 17] An enlarged sectional view illustrating a configuration of the oil seal alone according to the fourth embodiment of the present invention.
[Fig. 18] A plan view for explaining a storage amount of lubricant in accordance with a contact angle between a main lip and a flange part of a slinger in the oil seal according to the fourth embodiment of the present invention.
[Fig. 19] An enlarged sectional view illustrating a configuration of a sealing apparatus (an oil seal) of prior art.

### Description of Embodiments

Hereinafter, embodiments of the present invention will be described with reference to the accompanying drawings.

### <First Embodiment>

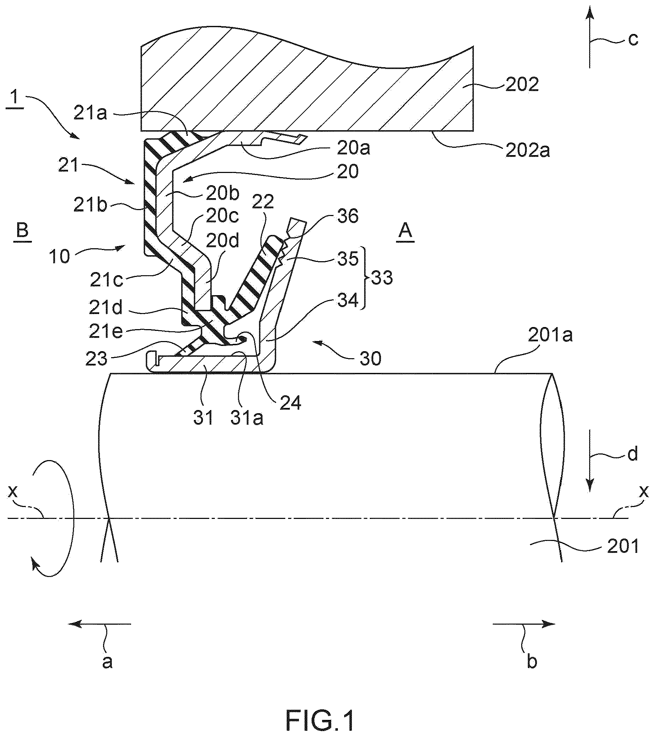

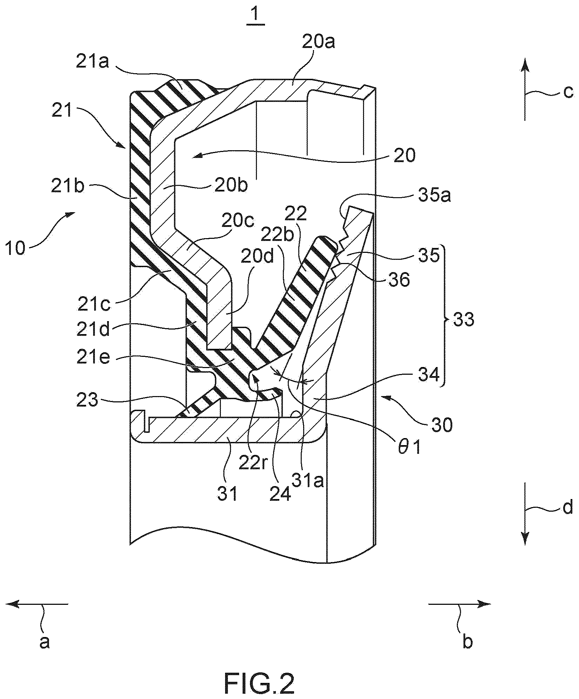

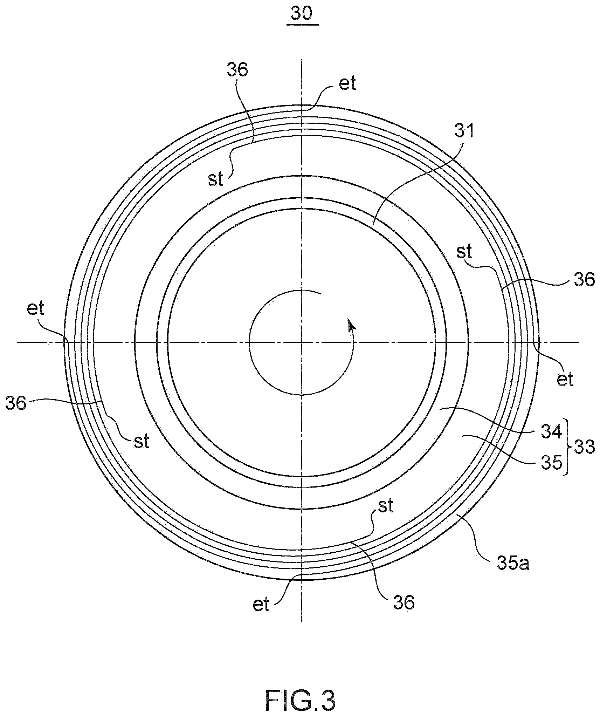

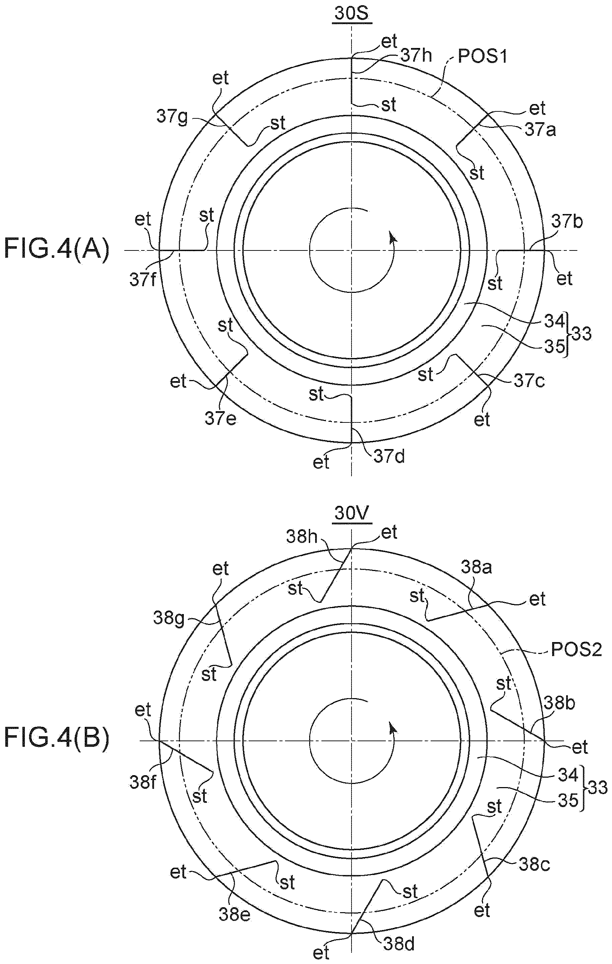

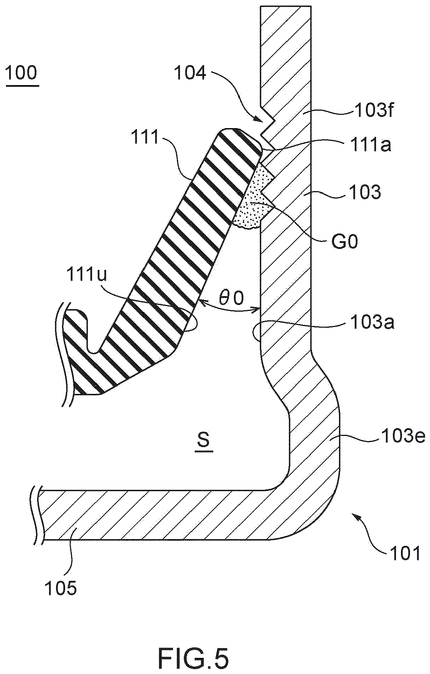

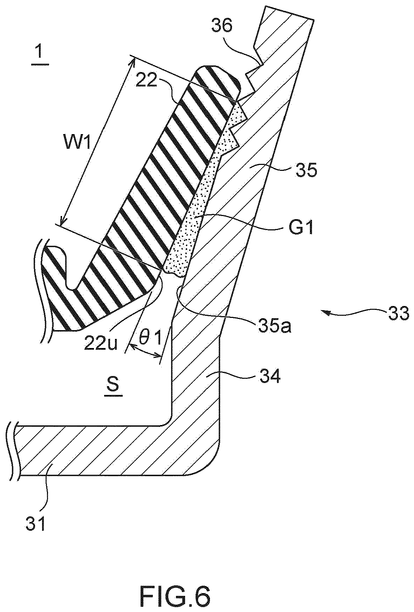

Fig. 1 is a sectional view illustrating a state where a sealing apparatus according to a first embodiment of the present invention is mounted. Fig. 2 is an enlarged sectional view illustrating a configuration of the sealing apparatus alone according to the first embodiment of the present invention. Fig. 3 is a plan view illustrating a configuration of a slinger according to the first embodiment of the present invention. Fig. 4 shows plan views illustrating other configuration examples of slingers according to the first embodiment of the present invention. Fig. 5 is a sectional view for explaining a storage amount of lubricant in accordance with a contact angle between a conventional main lip and a conventional flange part of a slinger according to the related art. Fig. 6 is a plan view for explaining a storage amount of lubricant in accordance with a contact angle between a main lip and a flange part of a slinger in the sealing apparatus according to the first embodiment of the present invention.

Hereinafter, as a matter of convenience in description, a direction indicated by an arrow a (refer to Fig. 1) in a direction of an axis line x is referred to as an outer side, and a direction indicated by an arrow b (refer to Fig. 1) in the direction of the axis line x is referred to as an inner side. More specifically, the outer side means an engine exterior B side that lies away from an engine, while the inner side means an engine interior A side that lies toward inside the engine. In addition, in a direction perpendicular to the axis line x (hereinafter, also referred to as a "radial direction"), a direction away from the axis line x (a direction indicated by an arrow c in Fig. 1) is referred to as an outer peripheral side, while a direction approaching the axis line x (a direction indicated by an arrow d in Fig. 1) is referred to as an inner periphery side.

### <Configuration of Sealing Apparatus>

As illustrated in Figs. 1 and 2, an oil seal 1 as the sealing apparatus according to the embodiment of the present invention is used as a seal for a motor vehicle engine (in particular, a gasoline engine) in which lubricant exists in the engine interior A, and is designed not only to prevent the lubricant in the engine interior A from leaking to the engine exterior B but also to prevent foreign matters such as dust from intruding from the engine exterior B into the engine interior A.

The oil seal 1 includes a seal part 10 that is to be mounted in an inner peripheral surface 202a that constitutes a surface on an inner periphery side (in the direction of the arrow d) of an engine housing (hereinafter, referred to simply as a "housing") 202, and a slinger 30 that is to be mounted on an outer peripheral surface 201a that constitutes a surface on an outer peripheral side (in the direction of the arrow c) of a crankshaft 201 as a rotational shaft that rotates relative to the housing 202, and is formed by combining the seal part 10 and the slinger 30 together.

The seal part 10 includes a reinforcement ring 20 and an elastic body part 21 that is formed integrally with the reinforcement ring 20. The reinforcement ring 20 is made up of a metallic material having an annular shape that is centered on the axis line x. A metallic material for the reinforcement ring 20 includes, for example, stainless steel or SPCC (cold-rolled steel sheet). On the other hand, an elastic body for the elastic body part 21 includes, for example, various types of rubber materials. These various types of rubber materials are synthetic rubbers including, for example, nitrile rubber (NBR), hydrogenated rubber (H-NBR), acrylic rubber (ACM), fluororubber (FKM), and the like.

The reinforcement ring 20 is fabricated through, for example, pressing or forging, and the elastic body part 21 is formed through cross-linking (vulcanization) molding by use of a mold. In this cross-linking molding, the reinforcement ring 20 is disposed inside the mold, and the elastic body part 21 is adhered to the reinforcement ring 20 through cross-linking (vulcanizing) adhesion, whereby the elastic body part 21 is formed integrally with the reinforcement ring 20.

The reinforcement ring 20 exhibits, for example, a substantially L-like shape in section and includes a cylindrical part 20a, an outer peripheral disc part 20b, a tapered part 20c, and an inner peripheral disc part 20d, and the cylindrical part 20a, the outer peripheral disc part 20b, the tapered part 20c, and the inner peripheral disc part 20d are all formed into an integral unit.

In this case, the cylindrical part 20a has a curved shape that protrudes convexly towards an outer peripheral side (in the direction of the arrow c). In addition, the outer peripheral disc part 20b, the tapered part 20c, and the inner peripheral disc part 20d form a substantially S-shaped flange part as a whole together.

The cylindrical part 20a constitutes a cylindrical part that extends substantially parallel along the axis line x and is fitted in the inner peripheral surface 202a of the housing 202. The outer peripheral disc part 20b constitutes a hollow disc-shaped part that expands in a direction that is substantially perpendicular to the axis line x, that is, from an end part on the outer side (in the direction of the arrow a) of the cylindrical part 20a towards an inner periphery side (in the direction of the arrow d). The tapered part 20c constitutes a hollow disc-shaped part that extends obliquely further towards the inner periphery side (in the direction of the arrow d) and the inner side (in the direction of the arrow b) from an end part on the inner periphery side (in the direction of the arrow d) of the outer peripheral disc part 20b. The inner peripheral disc part 20d constitutes a hollow disc-shaped part that expands further towards the inner periphery side (in the direction of the arrow d) from an end part on the inner periphery side (in the direction of the arrow d) of the tapered part 20c.

In this case, the cylindrical part 20a of the reinforcement ring 20 has the curved shape that protrudes convexly towards the outer peripheral side (in the direction of the arrow c), but the present invention is not limited to this configuration, and hence, the cylindrical part 20a may be a part having a cylindrical shape that extends straight along the axis line x. Although the reinforcement ring 20 is formed in a substantially S-like shape as a whole by the outer peripheral disc part 20b, the tapered part 20c, and the inner peripheral disc part 20d, the outer peripheral disc part 20b, the tapered part 20c, and the inner peripheral disc part 20d may extend straight in a direction that is substantially at right angles to the axis line x.

The elastic body part 21 is attached integrally to the reinforcement ring 20 and is formed integrally with the reinforcement ring 20 in such a manner as to cover an outer side (in the direction of the arrow a), part of the outer peripheral side (in the direction of the arrow c), and an inner periphery side (in the direction of the arrow d) of the reinforcement ring 20.

The elastic body part 21 includes a lip covering part 21a configured to cover part of the outer peripheral side (in the direction of the arrow c) of the cylindrical part 20a of the reinforcement ring 20, a lip covering part 21b configured to cover the outer peripheral disc part 20b of the reinforcement ring 20 from the outer side (from the direction of the arrow a), a lip covering part 21c configured to cover the tapered part 20c of the reinforcement ring 20, a lip covering part 21d configured to cover the inner peripheral disc part 20d of the reinforcement ring 20 from the outer side (from the direction of the arrow a), a lip waist part 21e that is integrated with the lip covering part 21d, and a main lip 22, a dust lip 23, and an intermediate lip 24 which are formed integrally with the lip waist part 21e.

The lip waist part 21e of the elastic body part 21 constitutes a part positioned near an end part on the inner periphery side (in the direction of the arrow d) of the inner peripheral disc part 20d of the reinforcement ring 20 and also constitutes a base part of the main lip 22, the dust lip 23, and the intermediate lip 24.

The main lip 22 of the elastic body part 21 constitutes a lip portion of an annular shape centered on the axis line x which extends obliquely further inwards (in the direction of the arrow b) and towards the outer peripheral side (in the direction of the arrow c) from an end part on the inner side (in the direction of the arrow b) of the lip waist part 21e, and expands diametrically from the inner periphery side (in the direction of the arrow d) towards the outer peripheral side (in the direction of the arrow c).

In the main lip 22, a thickness of a root portion 22r that extends from an end part on the inner side (in the direction of the arrow b) of the lip waist part 21e is formed thinner than a thickness of a main body portion 22b. This is because in the elastic body part 21, the main lip 22 is caused to bend easily from the root portion 22r as a starting point. The main lip 22 of this type may be referred to as a thin lip in the description.

The dust lip 23 of the elastic body part 21 constitutes a lip part of an annular shape centered on the axis line x which extends obliquely further outwards (in the direction of the arrow a) and towards the inner periphery side (in the direction of the arrow d) from an end part on the inner periphery side (in the direction of the arrow d) of the lip waist part 21e, and expands diametrically from the outer peripheral side (in the direction of the arrow c) towards the inner periphery side (in the direction of the arrow d). The direction in which the dust lip 23 extends is almost opposite to the direction in which the main lip 22 extends.

The intermediate lip 24 of the elastic body part 21 constitutes a lip part of an annular shape centered on the axis line x which is positioned further inner periphery side (in the direction of the arrow d) than the main lip 22 and is positioned further inwards (in the direction of the arrow b) than the dust lip 23 in the lip waist part 21e and which extends slightly inwards (in the direction of the arrow b) from an end part on the inner periphery side (in the direction of the arrow d) of the lip waist part 21e. A lip length of the intermediate lip 24 is short, and hence, a lip distal end of the intermediate lip 24 does not contact the slinger 30.

The slinger 30 is, for example, a metallic plate-shaped member configured to rotate in association with rotation of the crankshaft 201 in such a state that the slinger 30 is mounted on the outer peripheral surface 201a of the crankshaft 201, and includes a cylindrical part 31, and a flange part 33. The slinger 30 can be formed by bending, for example, a plate-shaped member.

The cylindrical part 31 of the slinger 30 constitutes a cylindrical portion that extends substantially parallel along the axis line x and is mounted by being press fitted on the outer peripheral surface 201a of the crankshaft 201 so as to be fixed thereto. The cylindrical part 31 of the slinger 30 has an outer peripheral surface 31a that constitutes a surface on the outer peripheral side (in the direction of the arrow c) thereof, and the lip distal end of the dust lip 23 of the elastic body part 21 slidably contacts the outer peripheral surface 31a thereof. As a result, foreign matters such as dust are prevented from intruding into the engine interior A from the engine exterior B.

The flange part 33 of the slinger 30 includes a vertical flange portion 34 and an inclined flange portion 35. The vertical flange portion 34 constitutes a part of a hollow disc-like shape centered on the axis line x which expands from an end part on the inner side (in the direction of the arrow b) of the cylindrical part 31 towards the outer peripheral side (in the direction of the arrow c) in the radial direction that is perpendicular to the axis line x.

A height of the vertical flange portion 34 towards the outer peripheral side (in the direction of the arrow c) is higher than a position of the lip distal end of the intermediate lip 24, and the vertical flange portion 34 is disposed in such a manner as to face the lip distal end of the intermediate lip 24. A space defined between the vertical flange portion 34 of the flange part 33 and the intermediate lip 24 becomes narrower to such an extent that the protruding portion 103e of the flange part 103 of the slinger 101 of the related art does not exist.

The inclined flange portion 35 constitutes a part of a hollow disc-like shape which is inclined at a predetermined angle towards the inner side (in the direction of the arrow b) and the outer peripheral side (in the direction of the arrow c) from an end part on the outer peripheral side (in the direction of the arrow c) of the vertical flange portion 34 and is formed integrally with the vertical flange portion 34.

This inclined flange portion 35 has an outer side surface 35a which constitutes a flat surface lying on the outer side (in the direction of the arrow a). Four thread grooves 36 of a spiral groove-like shape are provided at an end part area on the outer peripheral side (in the direction of the arrow c) of the outer side surface 35a for use in discharging lubricant G1 (Fig. 6) that intrudes into the space S to the engine exterior A.

As illustrated in Fig. 3, these four thread grooves 36 are formed in such positions that respective starting points st deviate 90 degrees from one another and are also formed in such positions that respective ending points et deviate 90 degrees from one another. The thread grooves 36 are formed to extend spirally about a full one circumference from the respective starting points st to the respective ending points et, but the present invention is not limited to this configuration. The thread grooves 36 may be formed to extend spirally less than the full one circumference such as about three fourth of the circumference, or more than the full one circumference such as about one and a half the circumference, about twice the circumference, and the like.

In addition, the thread grooves 36 are formed independently as four equally disposed grooves that advance while increasing their radii gradually rightwards (clockwise) from an inside diameter side towards an outside diameter side of the inclined flange portion 35. However, the present invention is not limited to this configuration, and hence, different numbers of thread grooves 36 may be provided as in the form of two equally disposed thread grooves, three equally disposed thread grooves, six equally disposed thread grooves, and the like. In this case, the slinger 30 rotates leftwards (counterclockwise) as indicted by an arrow in the figure in an opposite direction to the direction of the thread grooves 36.

However, grooves that are formed on the inclined flange portion 35 of the flange part 33 of the slinger 30 do not necessarily have to be limited to the thread grooves 36. For example, as illustrated in Fig. 4(A), in a slinger 30S, grooves to be formed may be radial grooves 37 (37a to 37h) that extend radially from an inside diameter side towards an outside diameter of an inclined flange portion 35 of a flange part 33 and extend into a straight line in a direction that is at right angles to an axis of the slinger 30. In this case, it is, for example, a position POS1 lying in the vicinity of almost a center of the radial grooves 37 that a lip distal end of the main lip 22 slides on an outer side surface 35a of the inclined flange portion 35.

Similarly, as illustrated in Fig. 4(B), in a slinger 30V, grooves to be formed may be inclined grooves 38 (38a to 38h) that extend from an inside diameter side towards an outside diameter of an inclined flange portion 35 of a flange part 33 but extend into a straight line in such a manner as to be inclined rightwards in the figure toward the outer peripheral direction from the inside diameter side towards the outside diameter side. In this case, it is, for example, a position POS2 lying slightly closer to an outer periphery than the vicinity of almost a center of the inclined grooves 38 that a lip distal end of a main lip 22 slides on an outer side surface 35a of the inclined flange portion 35.

In this case, compared with the thread grooves 36, in the radial grooves 37 and the inclined grooves 38, a length from a starting point st to an ending point et becomes very short, and hence, lubricant G1 can be shaken off along the radial grooves 37, the inclined grooves 38 within a short period of time to thereby be returned to the engine interior A side. In addition, compared with the thread grooves 36, with the radial grooves 37 and the inclined grooves 38, a greater number of grooves can be formed, and hence, a greater amount of lubricant G1 can be returned to the engine interior A side within a shorter period of time with the radial grooves 37 and the inclined grooves 38 than with the thread grooves 36.

The inclined flange portion 35 is inclined at a predetermined angle in order to make a relative contact angle Θ1 (Figs. 2, 6) when the lip distal end of the main lip 22 of the elastic body part 21 contact the outer side surface 35a smaller than a contact angle θ0 (Fig. 5) with respect to the conventional flange part 103 without the inclined flange portion 35. The contact angle (θ1) is 17 degrees or smaller.

In this case, since a contact area between the lip distal end of the main lip 22 and the outer side surface 35a is increased by such an extent that the contact angle Θ1 is smaller than the conventional contact angle θ0, it becomes easy to maintain the sealing properties. Here, the contact angle θ1 is based on a premise that the lip distal end of the main lip 22 is in contact with the outer side surface 35a of the inclined flange portion 35 with such an interference that although the lip distal end of the main lip 22 is pressed against the outer side surface 35a of the inclined flange portion 35, the lip tip end side of the main lip 22 is not bent. However, the present invention is not limited to such a premise, and hence, the outer side surface 35a of the inclined flange portion 35 and the lip distal end of the main lip 22 may be in contact with each other with such an interference that the tip end side of the main lip 22 is bent. In this case, the contact angle Θ1 should be a contact angle that is measured in a position lying a shorter distance from the tip end side than a length corresponding to about 20% of a length from the lip distal end to the root of the main lip 22. However, the present invention is not limited to this configuration, and hence, it is preferable that the contact angle Θ1 should be a contact angle measured in a tip end side position lying such a distance from the lip tip end side as a length corresponding to about 17% of the length from the tip end side. For example, in a case where the length from the lip distal end to the root of the main lip 22 is 6 mm, the contact angle θ1 should be a contact angle measured in a position lying about 1 mm, which corresponds to about 17% of the length from the lip tip end side, away from the tip end side.

In this way, the oil seal 1 has the structure in which the main lip 22 of the elastic body part 21 that contacts the outer side surface 35a of the inclined flange portion 35 of the flange part 33 of the slinger 30 is disposed on the engine interior A side to thereby prevent the lubricant from oozing out and the dust lip 23 of the elastic body part 21 that contacts the outer peripheral surface 31a of the cylindrical part 31 of the slinger 30 is disposed on the engine exterior B side to prevent not only dust from intruding from the engine exterior B side but also lubricant from leaking to the engine exterior B side.

Incidentally, a hub seal that is generally used in a hub bearing has a structure in which a side lip (corresponding to the main lip 22) of an elastic body part that contacts a flange part of a slinger is disposed on an engine exterior B side to prevent dust from intruding and a radial lip (corresponding to the dust lip 23) that contacts a cylindrical part of the slinger is disposed on an engine interior A side to prevent lubricant from leaking.

That is, in the oil seal 1 of the present invention, compared with the hub seal for use in the hub bearing, the main lip 22 that contacts the slinger 30 is disposed totally opposite and the role thereof is also opposite, and therefore, the oil seal 1 has the seal structure that basically differs from that of the hub seal.

In the oil seal 1 configured in the way described above, the annular closed space S (Fig. 6), which is centered on the axis line x, is formed by the main lip 22 and the dust lip 23 of the elastic body part 21, and the outer peripheral surface 31a of the cylindrical part 31 and the vertical flange portion 34 and the inclined flange portion 35 of the flange part 33 of the slinger 30.

This space S constitutes a space where to store the lubricant G1 (Fig. 6) that oozes out along the gap defined between the outer side surface 35a of the inclined flange portion 35 of the flange part 33 of the slinger 30 and the lip distal end of the main lip 22 from the engine interior A side into the space S. The lubricant G1 that is stored in this space S is restrained from leaking to the engine exterior B side by the existence of the dust lip 23.

### <Operation and Effect>

In the configuration that has been described heretofore, the oil seal 1 of the first embodiment is mounted by the seal part 10 being press fitted in the inner peripheral surface 202a of the housing 202 to be fixed thereto and the slinger 30 being press fitted on the outer peripheral surface 201a of the crankshaft 201 to be fixed thereto.

As this occurs, the dust lip 23 of the elastic body part 21 of the seal part 10 is caused to contact the outer peripheral surface 31a of the cylindrical part 31 of the slinger 30 with the predetermined interference, and the main lip 22 of the elastic body part 21 is caused to contact the outer side surface 35a of the inclined flange portion 35 of the flange part 33 of the slinger 30 with the predetermined interference. In this case, since the thickness of the root portion 22r is thinner than that of the main body portion 22b, the interference is something like such an interference that although the main lip 22 bends from the root thereof, the lip distal end does not bend.

At this time, the seal part 10 and the slinger 30 are assembled together so that the lip distal end of the main lip 22 of the elastic body part 21 contacts any one of the four thread grooves 36 without any fail.

In the oil seal 1, which is made up of the seal part 10 and the slinger 30 that are assembled and attached together as described above, the slinger 30 rotates leftwards (counterclockwise) as the crankshaft 201 rotates.

At this time, the oil seal 1 can move the lubricant G1 that has oozed into the space S from the inner periphery side (in the direction of the arrow d) to the outer peripheral side (in the direction of the arrow c) as a result of the effect of the four thread grooves 36 that are formed on the end part area on the outer peripheral side (in the direction of the arrow c) of the flange part 33 and can suck the lubricant G1 from the gap between the outer side surface 35a of the inclined flange portion 35 of the flange part 33 and the lip distal end of the main lip 22 into the engine interior A side, whereby the lubricant G1 is discharged from the space S (the thread action). That is, the thread grooves 36 have the oil discharging operation of sucking the lubricant G1 from the space S to the engine interior A side for discharge as its function. In this way, the thread grooves 36 configured to perform the discharging operation of returning the lubricant to the engine interior side of the housing 202 when the crankshaft 201 rotates are formed at the part on the outer side surface 35a of the inclined flange portion 35 that contacts the main lip 22.

Since the oil seal 1 can receive the lubricant G1 that has oozed into the space S by the existence of the intermediate lip 24 of the elastic body part 21, the oil seal 1 can suck out the lubricant G1 that intrudes into the space S to the engine interior A side while preventing the lubricant G1 from arriving directly at the dust lip 23.

In addition, the oil seal 1 can move the lubricant G1 inside the space S from the inner periphery side (in the direction of the arrow d) towards the outer peripheral side (in the direction of the arrow c) by virtue of the centrifugal force generated in association with rotation of the flange part 33 of the slinger 30 and discharge the lubricant G1 from the gap between the outer side surface 35a of the inclined flange portion 35 of the flange part 33 and the lip distal end of the main lip 22 to the engine interior A side while shaking off the lubricant G1 (the shaking off action).

That is, the oil seal 1 can perform a pumping effect of sucking the lubricant G1 existing in the space S into the engine interior A to thereby discharge the lubricant G1 by use of the thread action on the lubricant G1 in the space S by the effect of the thread grooves 36 and the shaking off action on the lubricant G1 in the space S by the centrifugal force of the inclined flange portion 35 of the flange part 33.

As illustrated in Fig. 5, the conventional sealing apparatus 100 (Fig. 19) has the relative contact angle θ0 between an inner side surface 111u constituting an inner surface of the main lip 111 and the outer side surface 103a of the flange part 103. Compared with this, as illustrated in Fig. 6, in the oil seal 1 of the present invention, the relative contact angle Θ1 between the inner side surface 22u of the main lip 22 and the outer side surface 35a of the inclined flange portion 35 is smaller than the contact angle θ0 (θ0 > θ1). That is, the narrowing and miniaturizing structure, which is configured to make small the relative contact angle Θ1 formed by the inclined flange portion 35 and the main lip 22 when the outer side surface 35a of the inclined flange portion 35 and the main lip 22 contacts each other, is formed between the inclined flange portion 35 and the main lip 22.

In contrast with this, in the conventional sealing apparatus 100, since the contact angle θ0 between the main lip 111 and the flange part 103 is great, an amount of lubricant G0 that is caused to adhere between the inner side surface 111u of the main lip 111 and the outer side surface 103a of the flange part 103 by virtue of the surface tension is small. Due to this, even though the pumping effect works, all the lubricant G0 that intrudes into the space S is not discharged to the engine interior A side with good efficiency, and hence, part of the lubricant G0 remains in the space S.

In contrast with this, in the oil seal 1 of the present invention, the relative contact angle θ1 between the main lip 22 and the inclined flange portion 35 of the flange part 33 is smaller than the conventional contact angle θ0. Due to this, an amount of lubricant G1 that is caused to adhere to be stored between the inner side surface 22u of the main lip 22 and the outer side surface 35a of the inclined flange portion 35 by virtue of the surface tension is greater than that of the conventional sealing apparatus 100.

That is, an adhering surface area of the lubricant G1 that is caused to adhere to the inner side surface 22u of the main lip 22 and the outer side surface 35a of the inclined flange portion 35 is greater than that of the conventional one. Specifically, an adhering width W1 of the lubricant G1 that is caused to adhere to the inner side surface 22u of the main lip 22 and the outer side surface 35a of the inclined flange portion 35 is greater than that of the conventional sealing apparatus 100 (Fig. 5).

Due to this, since the lubricant G1 that is caused to adhere between the inner side surface 22u of the main lip 22 and the outer side surface 35a of the inclined flange portion 35 by virtue of the surface tension is efficiently discharged to the engine interior A side altogether by the pumping effect, the lubricant G1 can be prevented from remaining in the space S.

In the conventional flange part 103, a speed vector directed to the outer peripheral side (in the direction of the arrow c) when the lubricant G0 adhering to the outer side surface 103a of the flange part 103 is shaken off by virtue of the centrifugal force is great.

In contrast with this, in the oil seal 1 of the present invention, since the inclined flange portion 35 is inclined, a speed vector directed to the outer peripheral side (in the direction of the arrow c) when the lubricant G1 adhering to the outer side surface 35a of the inclined flange portion 35 is shaken off by virtue of the centrifugal force becomes smaller than that of the conventional flange part 103.

Further, in the oil seal 1, since the inclined flange portion 35 is inclined, the lubricant G1 that adheres to the outer side surface 35a of the inclined flange portion 35 is made more reluctant to leave therefrom than the lubricant G0 that adheres to the conventional flange part 103. Consequently, in the oil seal 1, since the inclined flange portion 35 is inclined, the lubricant G1 adhering to the inclined flange portion 35 is discharged to the engine interior A side along the outer side surface 35a of the inclined flange portion 35 with good efficiency by virtue of the centrifugal force and the surface tension.

Thus, in the oil seal 1, even when the engine speed becomes a predetermined rotational speed or faster, the shaking off action of the lubricant G1 by virtue of the centrifugal force of the flange part 33 and the thread action of returning the lubricant G1 to the engine interior A side by the thread grooves 36 work effectively.

That is, in the oil seal 1, the pumping effect of returning the lubricant G1 that has oozed from the engine interior A side into the space S from the space S to the engine interior A side with good efficiency within a short period of time can be exhibited sufficiently. Thus, with the oil seal 1, even though the lubricant G1 in the engine interior A oozes into the space S, a result of the lubricant G1 remaining in the space S to thereby leak from the space S to the engine exterior B can be reduced remarkably.

Further, in the oil seal 1, since the gap between the vertical flange portion 34 of the slinger 30 and the intermediate lip 24 is narrower than that of the conventional sealing apparatus 100 (Fig. 19), an intrusion of dust from the engine exterior B side to the engine interior A side can be prevented more effectively than by the conventional sealing apparatus 100 by the labyrinth effect.

Further, in the oil seal 1, since the relative contact angle Θ1 between the lip distal end of the main lip 22 and the outer side surface 35a of the inclined flange portion 35 is smaller than that of the conventional sealing apparatus 100, the degree at which the inner side surface 22u of the main lip 22 contacts tightly the outer side surface 35a of the inclined flange portion 35 is increased more than that in the conventional sealing apparatus 100 to thereby close the thread grooves 36 more, the stationary leakage of the lubricant can be prevented more compared with the conventional sealing apparatus 100.

### <Example>

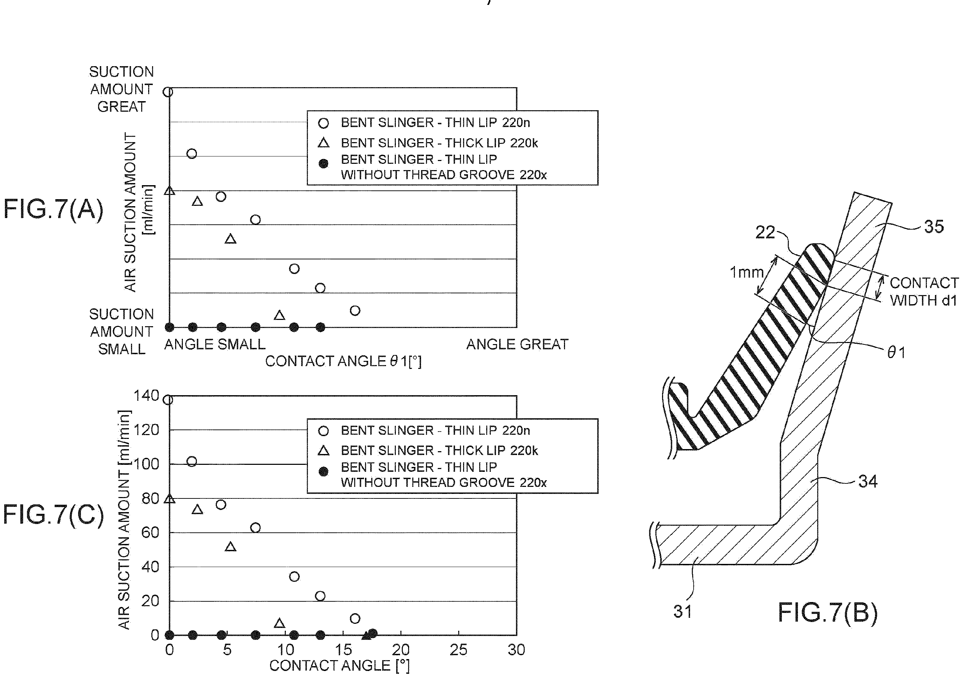

In the oil seal 1 of the present invention, change in an air suction amount of air containing the lubricant G1 existing in the space S into the engine interior A side was measured with the engine speed being, for example, 8000 rpm, and the relative contact angle Θ1 when the main lip 22 and the inclined flange portion 35 of the flange part 33 contact together being gradually reduced from a great angle of about 30 degrees to a small angle of about 0 degree. Fig. 7(A) is a graph representing a relationship between the contact angle Θ1 and the air suction amount.

Here, as the main lip 22 for use in the slinger 30, in addition to the thin lip described above, a thick lip in which a thickness of a root portion 22r is equal to or thicker than a thickness of a main body portion 22b may be used, and in the following description, a thin lip 220n is distinguished from a thick lip 220k. As a comparison target, a thin lip for use in a slinger (a slinger having a shape corresponding to the slinger 30 of the present invention) where no thread groove 36 is formed is distinguished as a thin lip 220x.

The results of the measurement shows that when the contact angle Θ1 is great, air suction amounts of the thin lip 220n, the thick lip 220k, and the thin lip 220x are 0 [ml/min], but as the contact angle Θ1 decreases, the air suction amounts increase almost linearly. With respect to the thin lip 220x used for a slinger on which no thread groove 36 is formed, since no thread groove 36 is formed, the air suction amount remains at 0 [ml/min] even through the contact angle Θ1 decreases, and it is expected that lubricant G1 oozes into the space S highly possibly.

In this way, with the oil seal 1, it has been found out that the air suction amount of air containing the lubricant G1 existing in the space S into the engine interior A side increases remarkably when the engine speed is 8000 rpm, the relative contact angle Θ1 between the main lip 22 and the inclined flange portion 35 of the flange part 33 decreases, and the adhering width W1 of the lubricant G1 to the outer side surface 35a of the inclined flange portion 35 increases.

That is, with the oil seal 1, it has been found out that even though the crankshaft 201 rotates at high speeds equal to or over the predetermined rotational speed, with the relative contact angle Θ1 between the main lip 22 and the inclined flange portion 35 of the flange part 33 decreasing, the lubricant G1 that has oozed from the engine interior A side into the space S can be returned to the engine interior A side efficiently, compared with the conventional sealing apparatus, thereby making it possible to prevent the lubricant G1 from being kept stored in the space S.

Thereafter, as illustrated in Fig. 7(B), under the same condition, an experiment was carried out using as a measurement reference a contact angle Θ1 measured in a position lying 1 mm away from an end part on the inner periphery side (in the direction of the arrow d) (hereinafter, also referred to as an "inner peripheral end") of a contact portion when the lip distal end of the main lip 22 contacts the inclined flange portion 35 of the flange part 33 of the slinger 30 over a contact width d1 (for example, 0.08 mm) with an interference of 2.5 mm along the inner side surface 22u of the main lip 22.

In this case, the length of main lip 22 from the lip distal end to the root portion 22r is 6mm, and the contact angle Θ1 is the contact angle measured at the position lying about 1 mm away from the inner peripheral end of the contact portion of a contact width d1 (for example, 5 mm) at the lip distal end, 1 mm corresponding to about 17% of the length.

As a result, as shown in Fig. 7 (C), it has been found out that when the contact angle Θ1 becomes about 17 degrees or smaller at the thin lip 220n (o), an air suction amount of air containing the lubricant G1 existing in the space S into the engine interior A side increases drastically. Specifically, the air suction amount becomes 23 ml/min when the contact angle Θ1 is about 13 degrees, the air suction amount becomes 78 ml/min when the contact angle Θ1 is about 5 degrees, and the air suction amount becomes 140 ml/min when the contact angle Θ1 is about 0 degree.

Similarly, it has been found out that when the contact angle Θ1 becomes about 17 degrees or smaller at the thick lip 220k (Δ), an air suction amount of air containing the lubricant G1 existing in the space S into the engine interior A side increases gradually.

That is, it has been found out that with the thin lip 220n (o) and the thick lip 220k (Δ) that are used for the slinger 30 on which the thread grooves 36 are formed, the air suction amounts increase more as the relative contact angle Θ1 between the main lip 22 and the inclined flange portion 35 decreases from an angle of about 17 degrees or less. However, with the thin lip 220x, since no thread groove 36 is provided, the air suction amount remains at 0 [ml/min] irrespective of the value of the contact angle Θ1.

### <Second Embodiment>

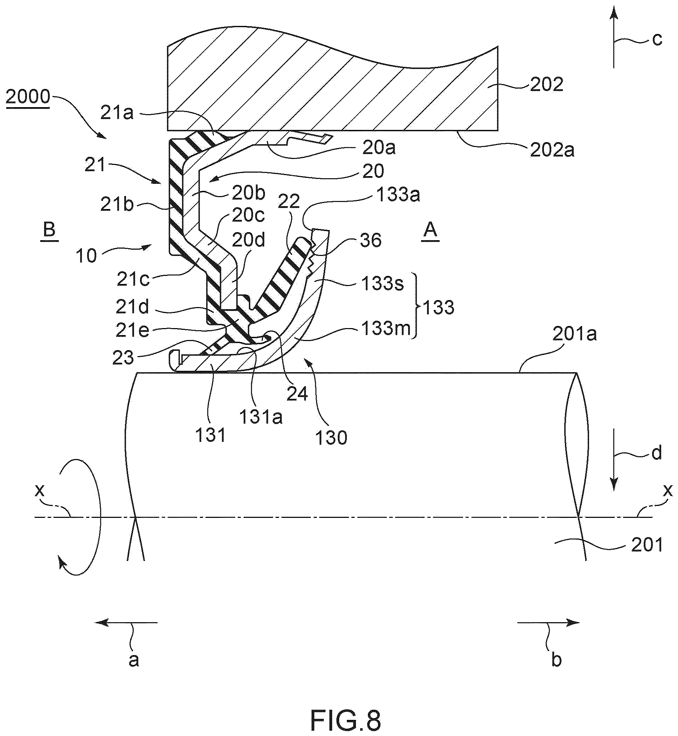

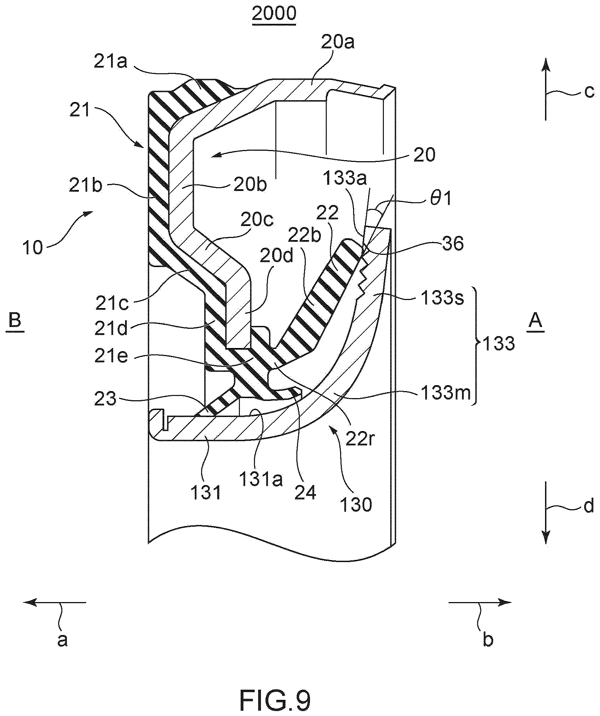

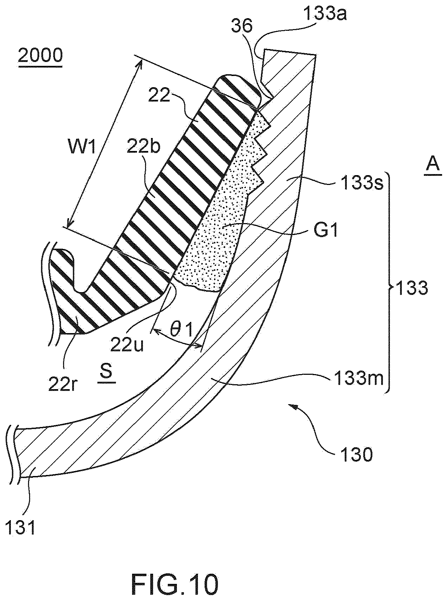

Fig. 8 is a sectional view illustrating a state where a sealing apparatus according to a second embodiment of the present invention is mounted. Fig. 9 is an enlarged sectional view illustrating a configuration of the sealing apparatus alone according to the second embodiment of the present invention. Fig. 10 is a plan view for explaining a storage amount of lubricant in accordance with a contact angle between a main lip and a flange part of a slinger of a sealing apparatus according to the second embodiment of the present invention.

### <Configuration of Sealing Apparatus>

As illustrated in Figs. 8 and 9, an oil seal 2000 as the sealing apparatus according to the second embodiment of the present invention is used as a seal for a motor vehicle engine (in particular, a gasoline engine) in which lubricant exists in an engine interior A, and is designed not only to prevent the lubricant in the engine interior A from leaking to an engine exterior B but also to prevent foreign matters such as dust from intruding from the engine exterior B into the engine interior A.

The oil seal 2000 includes a seal part 10 that is mounted in an inner peripheral surface 202a that constitutes a surface on an inner periphery side (in a direction of an arrow d) of a housing 202, and a slinger 130 that is mounted on an outer peripheral surface 201a that constitutes a surface on an outer peripheral side (in a direction of an arrow c) of a crankshaft 201 as a rotational shaft that rotates relative to the housing 202, and is formed by combining the seal part 10 and the slinger 130 together.

The seal part 10 includes a reinforcement ring 20 and an elastic body part 21 that is formed integrally with the reinforcement ring 20. Configurations of the reinforcement ring 20 and the elastic body part 21 are identical to those of the first embodiment, and hence, the description thereof will be omitted here.

The slinger 130 is, for example, a metallic plate-shaped member configured to rotate in association with rotation of the crankshaft 201 in such a state that the slinger 130 is mounted on the outer peripheral surface 201a of the crankshaft 201, and includes a cylindrical part 131, and a curved flange part 133 that is curved curvilinearly. The slinger 130 can be formed by bending, for example, a plate-shaped member.

The cylindrical part 131 of the slinger 130 constitutes a cylindrical portion extending substantially parallel along an axis line x and is mounted by being press fitted on the outer peripheral surface 201a of the crankshaft 201 that rotates relative to the housing 202 to thereby be fixed thereto. A length in the direction of the axis line x of the cylindrical part 131 is shorter than that of the cylindrical part 105 of the conventional slinger 101. The cylindrical part 131 of the slinger 130 has an outer peripheral surface 131a that is a surface on the outer peripheral side (in the direction of the arrow c), and a lip distal end of a dust lip 23 of the elastic body part 21 slidably contacts the outer peripheral surface 131a. As a result, foreign matters such as dust is prevented from intruding from the engine exterior B into the engine interior A.

The curved flange part 133 constitutes a flange portion having a ring-like shape and centered on the axis line x that extends from an end part on an inner side (in a direction of an arrow b) of the cylindrical part 131 while being curved curvilinearly in a direction in which it moves away from the axis line x of the crankshaft 201 and is formed concavely relative to the elastic body part 21. The curved flange part 133 includes a small-radius flange portion 133m whose radius of curvature is small and a large-radius flange portion 133s whose radius of curvature is larger than that of the small-radius flange portion 133m. The small-radius flange portion 133m and the large-radius flange portion 133s are integrated into one unit in such a manner that an outer side surface 133a, which constitutes a surface on an outer side (in a direction of an arrow a), continues smoothly.

Since the curved flange part 133 has the small-radius flange portion 133m that is curved from the end part on the inner side (in the direction of the arrow b) of the cylindrical part 131 whose length along the direction of the axis line x is short, when the curved flange part 133 faces an intermediate lip 24 of the elastic body part 21 in the direction of the axis line x, a gap between a lip distal end of the intermediate lip 24 and the outer side surface 133a of the curved flange part 133 (the small-radius flange portion 133m) becomes narrower compared with the related art sealing apparatus.

The radius of curvature of the large-radius flange portion 133s becomes much greater than that of the small-radius flange portion 133m, and the large-radius flange portion 133s constitutes a disc-shaped portion centered on the axis line x in which a curved portion bends moderately in such a manner as not to move towards the main lip 22 as it extends towards a distal end on the outer peripheral side (in the direction of the arrow c).

That is, in the large-radius flange portion 133s, the outer side surface 133a, which constitutes an end face on the outer side (in the direction of the arrow a) of the engine exterior B side, bends moderately at the curved portion in such a manner as not to move towards the main lip 22 as it extends towards the distal end on the outer peripheral side (in the direction of the arrow c). Due to this, a relative contact angle Θ1 (Figs. 9 and 10) between the lip distal end of the main lip 22 and the outer side surface 133a of the large-radius flange portion 133s is made smaller than the relative contact angle θ0 (Fig. 5) between the cylindrical part 105 of the conventional slinger 101 and the main lip 111.

Four thread grooves 36 of a spiral groove-like shape are provided at an end part area on the outer peripheral side (in the direction of the arrow c) of the outer side surface 133a of the large-radius flange portion 133s for use in discharging lubricant G1 (Fig. 10) that intrudes into a space S to the engine exterior A.

As illustrated in Fig. 3, these four thread grooves 36 have the same configuration as that of the thread grooves 36 of the first embodiment, and hence, the description thereof will be omitted here. In this case, too, the thread grooves 36 are formed independently as four equally disposed grooves. However, the present invention is not limited to this configuration, and hence, different numbers of thread grooves 36 may be provided as in the form of two equally disposed thread grooves, three equally disposed thread grooves, six equally disposed thread grooves, and the like.

In addition, radial grooves 37 (37a to 37h) and inclined grooves 38 (38a to 38h) like those illustrated in Figs. 4(A) and 4(B) may be used in place of the thread grooves 36.

As described above, the large-radius flange portion 133s of the curved flange part 133 is formed into the curved shape by the large radius of curvature in order that the relative contact angle Θ1 (Figs. 9, 10) when the lip distal end of the main lip 22 of the elastic body part 21 and the outer side surface 133a contact together is made smaller than the contact angle θ0 (Fig. 5) in the conventional sealing apparatus.

In this case, a contact area between the lip distal end of the main lip 22 and the outer side surface 133a of the large-radius flange portion 133s is increased by such an extent that the contact angle Θ1 is smaller than the conventional contact angle θ0, it becomes easy to maintain the sealing properties. Here, the contact angle Θ1 is based on a premise that the lip distal end of the main lip 22 is in contact with the outer side surface 133a of the large-radius flange portion 133s with such an interference that although the lip distal end of the main lip 22 is pressed against the outer side surface 133a of the large-radius flange portion 133s, the lip tip end side of the main lip 22 is not bent. However, the present invention is not limited to such a premise, and hence, the outer side surface 133a of the large-radius flange portion 133s may be in contact with the lip distal end with such an interference that the tip end side of the main lip 22 is bent. In this case, the contact angle Θ1 should be a contact angle that is measured in a tip end side position lying a shorter distance from the tip end side than a length corresponding to about 20% of a length from the lip distal end to the root of the main lip 22. However, the present invention is not limited to this configuration, and hence, it is preferable that the contact angle Θ1 is a contact angle measured in a position lying a shorter distance from the tip end side than a length corresponding to about 17% of the length from the lip distal end.

In this way, the oil seal 2000 has the structure in which the main lip 22 of the elastic body part 21 that contacts the outer side surface 133a of the large-radius flange portion 133s of the curved flange part 133 of the slinger 130 is disposed on the engine interior A side to thereby prevent the lubricant from oozing and the dust lip 23 of the elastic body part 21 that contacts the outer peripheral surface 131a of the cylindrical part 131 of the slinger 130 is disposed on the engine exterior B side to prevent not only dust from intruding from the engine exterior B side but also lubricant from leaking to the engine exterior B side.

Incidentally, a hub seal that is generally used in a hub bearing has a structure in which a side lip (corresponding to the main lip 22) of an elastic body part that contacts a flange part of a slinger is disposed on an engine exterior B side to prevent dust from intruding and a radial lip (corresponding to the dust lip 23) that contacts a cylindrical part of the slinger is disposed on an engine interior A side to prevent lubricant from leaking.

That is, in the oil seal 2000 of the present invention, compared with the hub seal for use in the hub bearing, the main lip 22 that contacts the slinger 130 is disposed totally opposite and the role thereof is also opposite, and therefore, the oil seal 2000 has the seal structure that basically differs from that of the hub seal.

In the oil seal 2000 configured in the way described above, the annular closed space S (Fig. 10), which is centered on the axis line x, is formed by the main lip 22 and the dust lip 23 of the elastic body part 21, and the outer peripheral surface 131a of the cylindrical part 131 and the small-radius flange portion 133m and the large-radius flange portion 133s of the curved flange part 133 of the slinger 130.

This space S constitutes a space where to store the lubricant G1 (Fig. 10) that oozes along the gap defined between the outer side surface 133a of the large-radius flange portion 133s of the curved flange part 133 of the slinger 130 and the lip distal end of the main lip 22 from the engine interior A side into the space S. The lubricant G1 that is stored in this space S is restrained from leaking to the engine exterior B side by the existence of the dust lip 23.

### <Operation and Effect>

In the configuration that has been described heretofore, the oil seal 2000 of the second embodiment is mounted by the seal part 10 being press fitted in the inner peripheral surface 202a of the housing 202 to be fixed thereto and the slinger 130 being press fitted on the outer peripheral surface 201a of the crankshaft 201 to be fixed thereto.

As this occurs, the dust lip 23 of the elastic body part 21 of the seal part 10 is caused to contact the outer peripheral surface 131a of the cylindrical part 131 of the slinger 130 with the predetermined interference, and the main lip 22 of the elastic body part 21 is caused to contact the outer side surface 133a of the curved flange part 133 the slinger 130 with the predetermined interference. In this case, in the main lip 22, since the thickness of the root portion 22r is thinner than that of the main body portion 22b, the interference is something like such an interference that although the main lip 22 bends from the root thereof, the lip distal end does not bend.

At this time, the seal part 10 and the slinger 130 are assembled together so that the lip distal end of the main lip 22 of the elastic body part 21 contacts any of the four thread grooves 36 without any fail.

In the oil seal 2000, which is made up of the seal part 10 and the slinger 130 that are assembled and attached together as described above, the slinger 130 rotates leftwards (counterclockwise) as the crankshaft 201 rotates.

At this time, the oil seal 2000 can move the lubricant G1 that has oozed into the space S from the inner periphery side (in the direction of the arrow d) to the outer peripheral side (in the direction of the arrow c) as a result of the effect of the four thread grooves 36 that are formed on the end part area on the outer peripheral side (in the direction of the arrow c) of the large-radius flange portion 133s of the curved flange part 133 and can suck in the lubricant G1 from the gap between the outer side surface 133a of the large-radius flange portion 133s and the lip distal end of the main lip 22 into the engine interior A side, whereby the lubricant G1 is discharged (the thread action). That is, the thread grooves 36 have the oil discharging operation of sucking the lubricant G1 from the space S to the engine interior A side for discharge as its function. In this way, the thread grooves 36 configured to perform the discharging operation of returning the lubricant to the engine interior side of the housing 202 when the crankshaft 201 rotates are formed at the portion on the outer side surface 35a of the inclined flange portion 35 that contacts the main lip 22.

Since the oil seal 2000 can receive the lubricant G1 that oozes into the space S by the existence of the intermediate lip 24 of the elastic body part 21, the oil seal 2000 can suck out the lubricant G1 that intrudes into the space S to the engine interior A side while preventing the lubricant G1 from arriving directly at the dust lip 23.

In addition, the oil seal 2000 can move the lubricant G1 in the space S from the inner periphery side (in the direction of the arrow d) towards the outer peripheral side (in the direction of the arrow c) by virtue of the centrifugal force generated in association with rotation of the curved flange part 133 of the slinger 130 and discharge the lubricant G1 from the gap between the outer side surface 133a of the large-radius flange portion 133s of the curved flange part 133 and the lip distal end of the main lip 22 to the engine interior A side while shaking off the lubricant G1 (the shaking off action).

That is, the oil seal 2000 can perform a pumping effect of discharging the lubricant G1 existing in the space S into the engine interior A by use of the thread action on the lubricant G1 in the space S by the effect of the thread grooves 36 and the shaking off action on the lubricant G1 in the space S by the centrifugal force of the large-radius flange portion 133s of the curved flange part 133.

As illustrated in Fig. 5, the conventional sealing apparatus 100 (Fig. 19) has the relative contact angle θ0 between the inner side surface 111u constituting the inner surface of the main lip 111 and the outer side surface 103a of the flange part 103. Compared with this, as illustrated in Fig. 10, in the oil seal 2000 of the present invention, the relative contact angle Θ1 between the inner side surface 22u of the main lip 22 and the outer side surface 133a of the large-radius flange portion 133s is smaller than the contact angle θ0 (θ0 > θ1). That is, the narrowing and miniaturizing structure configured to make small the relative contact angle Θ1 formed by the large-radius flange portion 133s and the main lip 22 when the outer side surface 133a of the large-radius flange portion 133s contacts the main lip 22 is formed between the large-radius flange portion 133s and the main lip 22.

In the conventional sealing apparatus 100, since the contact angle θ0 between the main lip 111 and the flange part 103 is great, an amount of lubricant G0 that is caused to adhere between the inner side surface 111u of the main lip 111 and the outer side surface 103a of the flange part 103 by virtue of the surface tension is small. Due to this, even though the pumping effect works, all the lubricant G0 that intrudes into the space S is not discharged to the engine interior A side with good efficiency, and hence, part of the lubricant G0 remains in the space S.

In contrast with this, in the oil seal 2000 of the present invention, the relative contact angle Θ1 between the main lip 22 and the large-radius flange portion 133s of the curved flange part 133 is smaller than the conventional contact angle θ0. Due to this, an amount of lubricant G1 that is caused to adhere to be stored between the inner side surface 22u of the main lip 22 and the outer side surface 133a of the large-radius flange portion 133s by virtue of the surface tension is greater than that of the conventional sealing apparatus 100.

That is, an adhering surface area of the lubricant G1 that is caused to adhere to the inner side surface 22u of the main lip 22 and the outer side surface 133a of the large-radius flange portion 133s is greater than that of the conventional sealing apparatus 100. Specifically, an adhering width W1 of the lubricant G1 that is caused to adhere to the inner side surface 22u of the main lip 22 and the outer side surface 133a of the large-radius flange portion 133s is greater than that of the conventional sealing apparatus 100 (Fig. 5).

Due to this, since the lubricant G1 that is caused to adhere between the inner side surface 22u of the main lip 22 and the outer side surface 133a of the large-radius flange portion 133s by virtue of the surface tension is efficiently discharged to the engine interior A side altogether by the pumping effect, the lubricant G1 can be prevented from remaining in the space S.

In the conventional flange part 103, a speed vector directed to the outer peripheral side (in the direction of the arrow c) when the lubricant G0 adhering to the outer side surface 103a of the flange part 103 is shaken off by virtue of the centrifugal force is great.

In contrast with this, in the oil seal 2000 of the present invention, since the large-radius flange portion 133s is curved, and the outer side surface 133a is not as vertical as that in the related art sealing apparatus 100 but is inclined, a speed vector directed to the outer peripheral side (in the direction of the arrow c) when the lubricant G1 adhering to the outer side surface 133a of the large-radius flange portion 133s is shaken off by virtue of the centrifugal force becomes smaller than that of the conventional flange part 103.

Further, in the oil seal 2000, since the large-radius flange portion 133s is curved and the outer side surface 133a is not as vertical as the conventional one, the lubricant G1 that adheres to the outer side surface 133a of the large-radius flange portion 133s is made more reluctant to leave therefrom than the lubricant G0 that adheres to the conventional flange part 103. Consequently, in the oil seal 2000, since the large-radius flange portion 133s is curved, the lubricant G1 adhering to the outer side surface 133a of the large-radius flange portion 133s is discharged to the engine interior A side along the outer side surface 133a of the large-radius flange portion 133s with good efficiency by virtue of the centrifugal force and the surface tension.

Thus, in the oil seal 2000, even when the engine speed becomes a predetermined rotational speed or faster, the shaking off action of the lubricant G1 by virtue of the centrifugal force of the curved flange part 133 and the thread action of returning the lubricant G1 to the engine interior A side by the thread grooves 36 work effectively.

That is, in the oil seal 2000, the pumping effect of returning the lubricant G1 that has oozed from the engine interior A side into the space S from the space S to the engine interior A side with good efficiency within a short period of time can be exhibited sufficiently. Thus, with the oil seal 2000, even though the lubricant G1 in the engine interior A oozes into the space S, a result of the lubricant G1 remaining in the space S to thereby leak from the space S to the engine exterior B can be reduced remarkably.

Further, in the oil seal 2000, since the gap between the curved flange part 133 of the slinger 130 and the intermediate lip 24 is narrower than that of the conventional sealing apparatus 100 (Fig. 19), an intrusion of dust from the engine exterior B side to the engine interior A side can be prevented more effectively than by the related art sealing apparatus 100 by the labyrinth effect.

Further, in the oil seal 2000, since the relative contact angle Θ1 between the lip distal end of the main lip 22 and the outer side surface 133a of the large-radius flange portion 133s is smaller than the conventional one, the degree at which the inner side surface 22u of the main lip 22 contacts tightly the outer side surface 133a of the large-radius flange portion 133s is increased higher than the conventional one to thereby close the thread grooves 36 more, the stationary leakage of the lubricant can be prevented more than the conventional one.

### <Example>

In the oil seal 2000 of the present invention, change in an air suction amount of air containing the lubricant G1 existing in the space S into the engine interior A side was measured with the engine speed being, for example, 8000 rpm, and the relative contact angle Θ1 when the main lip 22 and the large-radius flange portion 133s of the curved flange part 133 contact together being gradually reduced from a great angle of about 30 degrees to a small angle of about 0 degree. Fig. 7(A) is the graph representing the relationship between the contact angle Θ1 and the air suction amount.

Here, as the main lip 22 for use in the slinger 130, in addition to the thin lip described above, a thick lip in which a thickness of a root portion 22r is almost equal to or thicker than a thickness of a main body portion 22b may be used, and in the following description, a thin lip 220n is distinguished from a thick lip 220k. As a comparison target, a thin lip for use in a slinger (a slinger having a shape corresponding to the slinger 130 of the present invention) where no thread groove 36 is formed is distinguished as a thin lip 220x.

The results of the measurement shows that when the contact angle Θ1 is great, air suction amounts of the thin lip 220n, the thick lip 220k, and the thin lip 220x are 0 [ml/min], but as the contact angle Θ1 decreases, the air suction amounts increase almost linearly. In relation to the thin lip 220x for no thread groove 36 formed, since no thread groove 36 is formed, the air suction amount remains at 0 [ml/min] even through the contact angle Θ1 decreases, and it is expected that lubricant G1 oozes into the space S highly possibly.

In this way, with the oil seal 2000, it has been found out that the air suction amount of air containing the lubricant G1 existing in the space S into the engine interior A side increases remarkably when the engine speed is 8000 rpm, the relative contact angle Θ1 between the main lip 22 and the large-radius flange portion 133s of the curved flange part 133 decreases, and the adhering width W1 of the lubricant G1 to the outer side surface 133a of the large-radius flange portion 133s increases.

That is, with the oil seal 2000, it has been found out that even though the crankshaft 201 rotates at high speeds equal to or over the predetermined rotational speed, with the relative contact angle Θ1 between the main lip 22 and the large-radius flange portion 133s of the curved flange part 133 decreasing, the lubricant G1 that oozes from the engine interior A side into the space S can be returned to the engine interior A side efficiently, compared with the conventional one, thereby making it possible to prevent the lubricant G1 from being kept stored in the space S.

In this case, too, in case, similar to what is illustrated in Fig. 7(B), the length of the main lip 22 from the lip distal end to the root portion 22ris 6 mm, the contact angle Θ1 constitutes the contact angle measured in the position lying about 1 mm away from the inner peripheral end of the contact portion at the lip distal end, 1 mm corresponding to about 17% of the length, it has been found out as shown in Fig. 7 (C) that when the contact angle Θ1 becomes about 17 degrees or smaller at the thin lip 220n (o) and the thick lip 220k (Δ), an air suction amount of air containing the lubricant G1 existing in the space S into the engine interior A side increases drastically.

That is, it has been found out that with the thin lip 220n (o) and the thick lip 220k (Δ) that are used for the slinger 30 on which the thread grooves 36 are formed, the air suction amounts increase more as the relative contact angle Θ1 between the main lip 22 and the large-radius flange portion 133s decreases from an angle of about 17 degrees or less.

### <Third Embodiment>

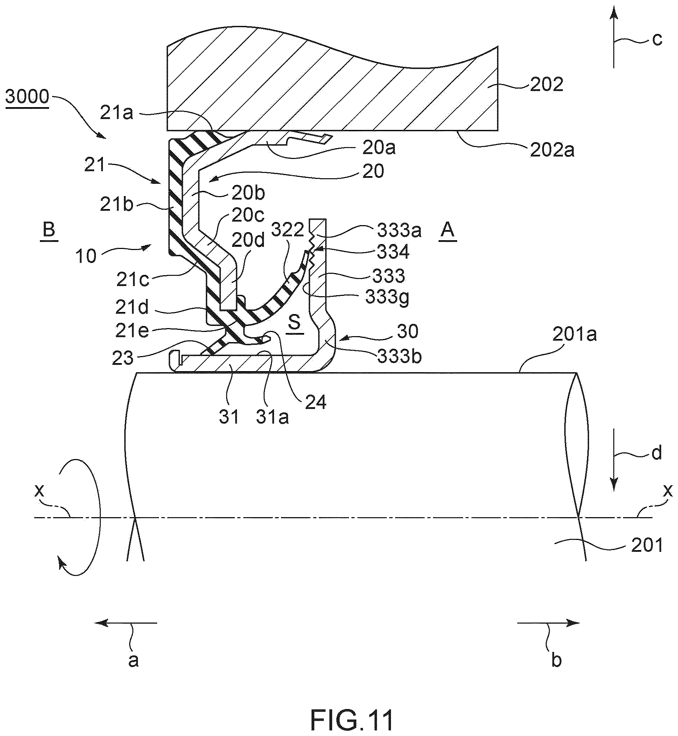

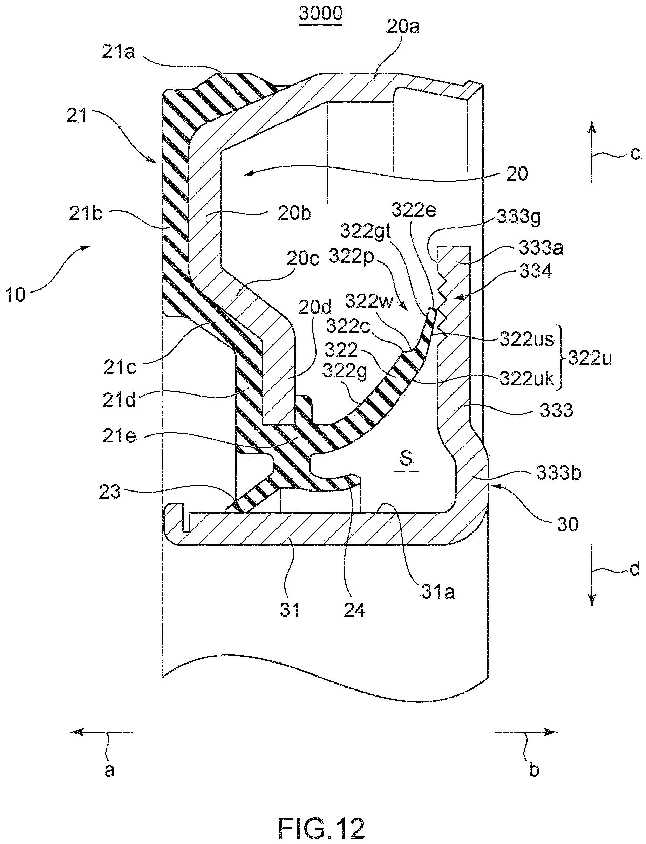

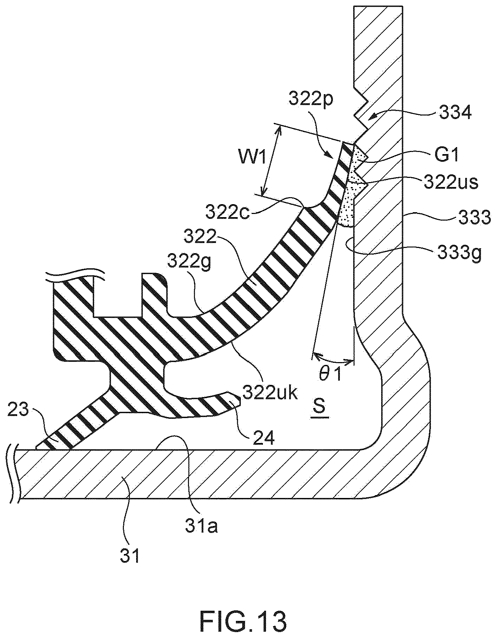

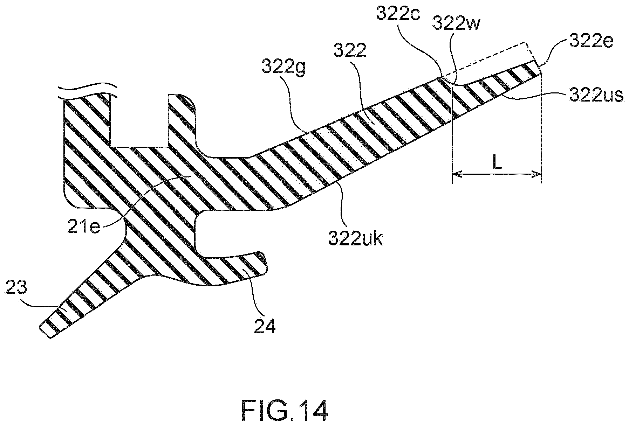

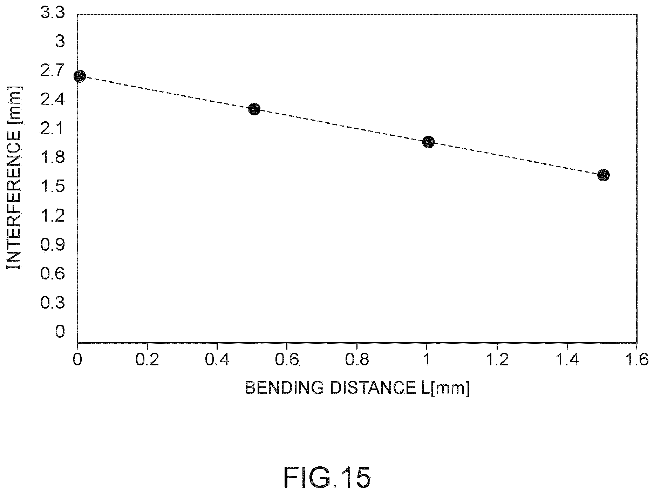

Fig. 11 is a sectional view illustrating a state where a sealing apparatus according to a third embodiment of the present invention is mounted. Fig. 12 is an enlarged sectional view illustrating a configuration of the sealing apparatus alone according to the third embodiment of the present invention. Fig. 13 is a plan view for explaining a storage amount of lubricant in accordance with a contact angle between a main lip and a flange part of a slinger in the sealing apparatus according to the third embodiment of the present invention. Fig. 14 is a sectional view with omitted lines illustrating a bending distance L between a center of a curved surface where a thin distal end part of an oil seal according to the third embodiment of the present invention bends and a distal-most end face. Fig. 15 is a graph representing a relationship between a bending distance and an interference according to the third embodiment of the present invention.

### <Configuration of Sealing Apparatus>

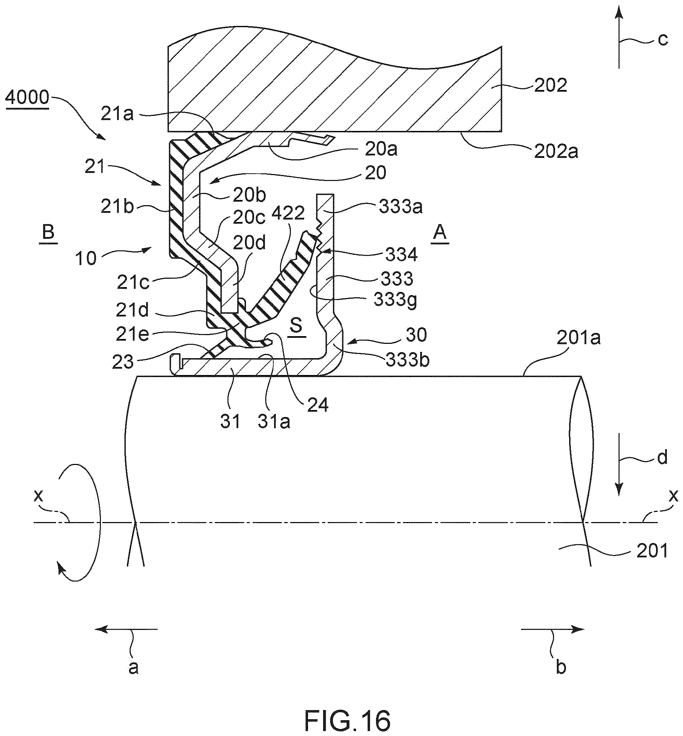

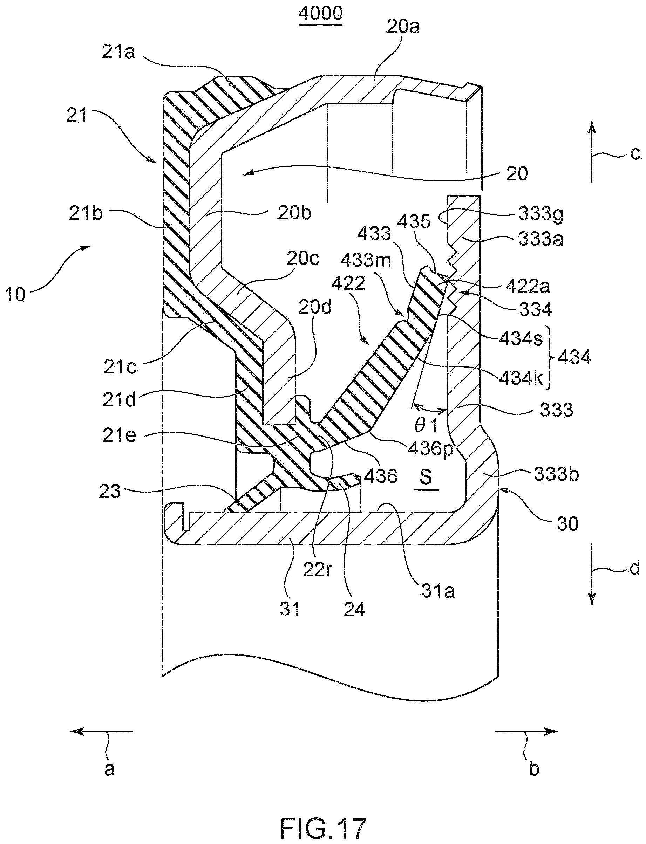

As illustrated in Figs. 16 and 17, an oil seal 3000 as the sealing apparatus according to the third embodiment of the present invention is used as a seal for a motor vehicle engine (in particular, a gasoline engine) in which lubricant exists in an engine interior A, and is designed not only to prevent the lubricant in the engine interior A from leaking to an engine exterior B but also to prevent foreign matters such as dust from intruding from the engine exterior B into the engine interior A.

The oil seal 3000 includes a seal part 10 that is mounted in an inner peripheral surface 202a that constitutes a surface on an inner periphery side (in a direction of an arrow d) of a housing 202, and a slinger 30 that is mounted on an outer peripheral surface 201a that constitutes a surface on an outer peripheral side (in a direction of an arrow c) of a crankshaft 201 as a rotational shaft that rotates relative to the housing 202, and is formed by combining the seal part 10 and the slinger 30 together.

The seal part 10 includes a reinforcement ring 20 and an elastic body part 21 that is formed integrally with the reinforcement ring 20. A configuration of the reinforcement ring 20 is identical to that of the first embodiment, and hence, the description thereof will be omitted here as a matter of convenience.

The elastic body part 21 is attached integrally to the reinforcement ring 20 and is formed integrally with the reinforcement ring 20 in such a manner as to cover an outer side (in a direction of an arrow a), part of an outer peripheral side (in the direction of the arrow c), and an inner periphery side (in the direction of the arrow d) of the reinforcement ring 20.

The elastic body part 21 includes a lip covering part 21a, a lip covering part 21b, a lip covering part 21c, a lip covering part 21d, a lip waist part 21e, a main lip 322, a dust lip 23, and an intermediate lip 24 and differs from the elastic body parts 21 of the first and second embodiments only in the shape of the main lip 322.

The main lip 322 of the elastic body part 21 constitutes a lip portion of an annular shape centered on an axis line x which extends obliquely further inwards (in the direction of the arrow b) and towards the outer peripheral side (in the direction of the arrow c) from an end part at an inner side (in the direction of the arrow b) of the lip waist part 21e, and expands diametrically from the inner periphery side (in the direction of the arrow d) towards the outer peripheral side (in the direction of the arrow c).

The main lip 322 has a width or a thickness defined between an outer peripheral surface 322g constituting a surface on the outer peripheral side (in the direction of the arrow c) and an inner peripheral surface 322u constituting a surface on the inner periphery side (in the direction of the arrow d) that continues constant in thickness from the lip waist part 21e towards a tip end side thereof. The main lip 322 includes at a lip tip end side a thin distal end part 322p that has a shape formed by cutting partially the outer peripheral surface 322g that does not contact an outer side surface 333g of a flange part 333 of the slinger 30, which will be described later, and which is thinner than a main body of the main lip 322.

The thin distal end part 322p of the main lip 322 is defined by a curved surface 322w, a thin outer peripheral surface 322gt, a distal-most end face 322e, and a thin inner peripheral surface 322us.

The curved surface 322w of the thin distal end part 322p constitutes a surface that is curved in an arc-like shape from a cut-out position 322c that lies by a predetermined length (for example, on the order of 1 mm) nearer to the lip waist part 21e from the distal-most end face 322e, constituting a surface that continues from the outer peripheral surface 322g to the distal-most end face 322e via the cut-out position 322c.

The thin outer peripheral surface 322gt constitutes a flat surface that continues smoothly from the curved surface 322w and which extends rectilinearly almost parallel to the thin inner peripheral surface 322us that contacts the outer side surface 333g of the flange part 333 of the slinger 30 as far as the distal-most end face 322e. However, the present invention is not limited to this configuration, and hence, the thin outer peripheral surface 322gt may constitute a flat surface that does not extend almost parallel to the thin inner peripheral surface 322us but is inclined in such a manner that the width defined with the thin inner peripheral surface 322us is narrowed gradually towards the distal-most end face 322e. In this case, the thin distal end part 322p is given a tapered shape in which the thin distal end part 322p becomes slightly thinner as it proceeds towards the tip end side.

The distal-most end face 322e constitutes an end surface at a distal-most end of the main lip 322 and a flat surface that is almost perpendicular to the thin outer peripheral surface 322gt and the thin inner peripheral surface 322us. However, the present invention is not limited to this configuration and hence, the distal-most end face 322e may be a rounded curved surface.

In the inner peripheral surface 322u of the main lip 322, the thin inner peripheral surface 322us constitutes a contact surface at a lip tip end side that contacts the outer side surface 333g constituting a surface at the outer side (in the direction of the arrow a) of the flange part 333 of the slinger 30, which will be described later. In the inner peripheral surface 322u, a surface between the thin inner peripheral surface 322us and the lip waist part 21e constitutes a thick inner peripheral surface 322uk. This thick inner peripheral surface 322uk constitutes a non-contact surface at a base end side that does not contact the outer side surface 333g of the flange part 333 of the slinger 30.

Configurations of the dust lip 23 and the intermediate lip 24 of the elastic body part 21 are identical to those of the first embodiment, and hence, the description thereof will be omitted here.

The slinger 30 is, for example, a metallic plate-shaped member configured to rotate in association with rotation of the crankshaft 201 in such a state that the slinger 30 is mounted on the outer peripheral surface 201a of the crankshaft 201, and includes a cylindrical part 31, and the flange part 333. The slinger 30 can be formed by bending, for example, a plate-shaped member.

The cylindrical part 31 of the slinger 30 constitutes a cylindrical portion that extends substantially parallel along the axis line x and is mounted by being press fitted on the outer peripheral surface 201a of the crankshaft 201 that rotates relative to the housing 202 so as to be fixed thereto. The cylindrical part 31 of the slinger 30 has an outer peripheral surface 31a that constitutes a surface at the outer peripheral side (in the direction of the arrow c) thereof, and the lip distal end of the dust lip 23 of the elastic body part 21 slidably contacts an outer peripheral surface 31a thereof. As a result, foreign matters such as dust are prevented from intruding into the engine interior A from the engine exterior B.

The flange part 333 of the slinger 30 includes a protruding portion 333b of a hollow disc-like shape that protrudes towards the engine interior A side and a disc portion 333a of a hollow disc-like shape that is bent towards the engine exterior B side from an end part at the outer peripheral side of the protruding portion 333b and which then expands to the outer peripheral side (in the direction of the arrow c).

A height to the outer peripheral side (in the direction of the arrow c) of the protruding portion 333b of the flange part 333 is higher than a position of the lip distal end of the intermediate lip 24, and the protruding portion 333b is disposed in such a manner as to face the lip distal end of the intermediate lip 24.

In the oil seal 3000, the thin distal end part 322p of the main lip 322 of the elastic body part 21 slidably tightly contacts the outer side surface 333g constituting an end face at the engine exterior B side of the disc portion 333a of the flange part 333 in the axial direction, whereby lubricant (oil) existing in the engine interior A is prevented from leaking to the engine exterior B.

In this oil seal 3000, four spiral groove-shaped thread grooves 334 are provided at an end part area of the outer side surface 333g that the thin distal end part 322p of the main lip 322 slidably tightly contacts for use in discharging lubricant G1 (Fig. 13) that intrudes into a space S to the engine exterior side A.

The thread grooves 334 constitute four equally disposed spiral grooves that are disposed independently at constant intervals and which advance rightwards from an inside diameter side to an external diameter side in accordance with a rotational direction of the crankshaft 201, and respective starting points and ending points of the grooves differ from one another. The thread grooves 334 are formed on the outer side surface 333g of the disc portion 333a of the flange part 333 of the slinger 30, and the thin distal end part 322p of the main lip 322 of the elastic body part 21 contacts the outer side surface 333g within a range of the four thread grooves 334.

As illustrated in Fig. 3, these four thread grooves 334 have the same configuration as that of the thread grooves 36 of the first embodiment, and hence, the description thereof will be omitted here. In this case, too, the thread grooves 334 are formed independently as four equally disposed grooves. However, the present invention is not limited to this configuration, and hence, different numbers of thread grooves 334 may be provided as in the form of two equally disposed thread grooves, three equally disposed thread grooves, six equally disposed thread grooves, and the like.

In addition, radial grooves 37 (37a to 37h) and inclined grooves 38 (38a to 38h) like those illustrated in Figs. 4(A) and 4(B) may be used in place of the thread grooves 334.

As described above, since the thin distal end part 322p of the main lip 322 is formed into the thinner shape than the main body portion of the main lip 322, a relative contact angle Θ1 (Fig. 13) when the thin distal end part 322p of the main lip 322 contacts the outer side surface 333g of the flange part 333 can be made smaller than the conventional contact angle θ0 (Fig. 5).

In this case, since a contact area between the thin distal end part 322p of the main lip 322 and the outer side surface 333g of the flange part 333 is increased by such an extent that the contact angle θ1 is smaller than the conventional contact angle θ0, it becomes easy to maintain the sealing properties. Here, the contact angle Θ1 is based on a premise that the thin distal end part 322p of the main lip 322 is in contact with the outer side surface 333g of the flange part 333 with such an interference that the main body portion of the main lip 322 is not bent when the thin distal end part 322p of the main lip 322 is pressed against the outer side surface 333g of the flange part 333.

In this way, the oil seal 3000 has the structure in which the main lip 322 of the elastic body part 21 that contacts the outer side surface 333g of the flange part 333 of the slinger 30 is disposed on the engine interior A side to thereby prevent the lubricant from oozing out, and the dust lip 23 of the elastic body part 21 that contacts the outer peripheral surface 31a of the cylindrical part 31 of the slinger 30 is disposed on the engine exterior B side to prevent not only dust from intruding from the engine exterior B side but also lubricant from leaking out to the engine exterior B side.

Incidentally, a hub seal that is generally used in a hub bearing has a structure in which a side lip (corresponding to the main lip 322) of an elastic body part that contacts a flange part of a slinger is disposed on an engine exterior B side to prevent dust from intruding and a radial lip (corresponding to the dust lip 23) that contacts a cylindrical part of the slinger is disposed on an engine interior A side to prevent lubricant from leaking.

That is, in the oil seal 3000 of the present invention, compared with the hub seal for use in the hub bearing, the main lip 322 that contacts the slinger 30 is disposed totally opposite and the role thereof is also opposite, and therefore, the oil seal 3000 has the seal structure that basically differs from that of the hub seal.

In the oil seal 3000 configured in the way described above, the annular closed space S (Figs. 12 and 13), which is centered on the axis line x, is formed by the main lip 322 and the dust lip 23 of the elastic body part 21, and the outer peripheral surface 31a of the cylindrical part 31 and the outer side surface 333g of the flange part 333 of the slinger 30.

This space S constitutes a space where to store the lubricant G1 (Fig. 13) that oozes out along the gap defined between the outer side surface 333g of the flange part 333 of the slinger 30 and the thin distal end part 322p of the main lip 322 from the engine interior A side into the space S. The lubricant G1 that is stored in this space S is restrained from leaking to the engine exterior B side by the existence of the dust lip 23.

### <Operation and Effect>

In the configuration that has been described heretofore, the oil seal 3000 of the third embodiment is mounted by the seal part 10 being press fitted in the inner peripheral surface 202a of the housing 202 to be fixed thereto and the slinger 30 being press fitted on the outer peripheral surface 201a of the crankshaft 201 to be fixed thereto.

As this occurs, the dust lip 23 of the elastic body part 21 of the seal part 10 is caused to contact the outer peripheral surface 31a of the cylindrical part 31 of the slinger 30 with the predetermined interference, and the main lip 322 of the elastic body part 21 is caused to contact the outer side surface 333g of the flange part 333 of the slinger 30 with the predetermined interference. In this case, in the main lip 322, since the thickness of the thin distal end part 322p of the main lip 322 is thinner than the thickness of the main body part of the main lip 322 that is defined between the outer peripheral surface 322g and the thick inner peripheral surface 322uk, the thin distal end part 322p that is pressed against the outer side surface 333g of the flange part 333 is bent around almost a center of the curved surface 322w as a starting point.

At this time, the seal part 10 and the slinger 30 are assembled together so that the thin inner peripheral surface 322us of the thin distal end part 322p of the main lip 322 contacts any of the four thread grooves 334 without any fail.

In the oil seal 3000, which is made up of the seal part 10 and the slinger 30 that are assembled and attached together as described above, the slinger 30 rotates leftwards (counterclockwise) as the crankshaft 201 rotates.

At this time, the oil seal 3000 can move the lubricant G1 that has oozed into the space S from the inner periphery side (in the direction of the arrow d) to the outer peripheral side (in the direction of the arrow c) as a result of the effect of the four thread grooves 334 that are formed on the end part area on the outer peripheral side (in the direction of the arrow c) of the flange part 333 and can suck the lubricant G1 from the gap between the outer side surface 333g of the flange part 333 and the thin inner peripheral surface 322us of the thin distal end part 322p of the main lip 322 into the engine interior A side, whereby the lubricant G1 is discharged (the thread action). That is, the thread grooves 334 have the oil discharging operation of sucking the lubricant G1 from the space S to the engine interior A side for discharge as its function. In this way, the thread grooves 334 configured to perform the discharging operation of returning the lubricant to the engine interior side of the housing 202 when the crankshaft 201 rotates are formed at the portion on the outer side surface 333a of the flange part 333 that contacts the main lip 322.

Since the oil seal 3000 can receive the lubricant G1 that oozes into the space S by the existence of the intermediate lip 24 of the elastic body part 21, the oil seal 3000 can suck out the lubricant G1 that intrudes into the space S to the engine interior A side while preventing the lubricant G1 from arriving directly at the dust lip 23.

In addition, the oil seal 3000 can move the lubricant G1 inside the space S from the inner periphery side (in the direction of the arrow d) towards the outer peripheral side (in the direction of the arrow c) by virtue of the centrifugal force generated in association with rotation of the flange part 333 of the slinger 30 and discharge the lubricant G1 from the gap between the outer side surface 333g of the flange part 333 and the thin inner peripheral surface 322us of the thin distal end part 322p of the main lip 322 to the engine interior A side while shaking off the lubricant G1 (the shaking off action).

That is, the oil seal 3000 can perform a pumping effect of sucking the lubricant G1 existing in the space S into the engine interior A and discharging the lubricant G1 by use of the thread action on the lubricant G1 in the space S by the effect of the thread grooves 334 and the shaking off action on the lubricant G1 in the space S by the centrifugal force of the flange part 333.

As illustrated in Fig. 5, the conventional sealing apparatus 100 (Fig. 19) has the relative contact angle θ0 between the inner side surface 111u constituting the inner surface of the main lip 111 and the outer side surface 103a of the flange part 103. Compared with this, as illustrated in Fig. 13, in the oil seal 3000 of the present invention, the relative contact angle Θ1 between the thin inner peripheral surface 322us of the thin distal end part 322p of the main lip 322 and the outer side surface 333g of the flange part 333 is smaller than the contact angle θ0 (θ0 > θ1). That is, a narrowing and miniaturizing structure configured to make small the relative contact angle Θ1 formed by the flange part 333 and the main lip 322 when the outer side surface 333g of the flange part 333 contacts the main lip 322 is formed between the flange part 333 and the main lip 322.

In the conventional sealing apparatus 100, since the contact angle θ0 between the main lip 111 and the flange part 103 is great, an amount of lubricant G0 that is caused to adhere between the inner side surface 111u of the main lip 111 and the outer side surface 103a of the flange part 103 by virtue of the surface tension is small. Due to this, even though the pumping effect works, all the lubricant G0 that intrudes into the space S is not discharged to the engine interior A side with good efficiency, and hence, part of the lubricant G0 remains in the space S.

In contrast with this, in the oil seal 3000 of the present invention, the relative contact angle Θ1 between the thin inner peripheral surface 322us of the thin distal end part 322p of the main lip 322 and the outer side surface 333g of the flange part 333 is smaller than the conventional contact angle θ0. Due to this, an amount of lubricant G1 that is caused to adhere to be stored between the thin inner peripheral surface 322us of the thin distal end part 322p of the main lip 322 and the outer side surface 333g of the flange part 333 by virtue of the surface tension is greater than that of the conventional one.

That is, an adhering surface area of the lubricant G1 that is caused to adhere to the thin inner peripheral surface 322us of the thin distal end part 322p of the main lip 322 and the outer side surface 333g of the flange part 333 is greater than that of the conventional one. Specifically, an adhering width W1 of the lubricant G1 that is caused to adhere to the thin inner peripheral surface 322us of the thin distal end part 322p of the main lip 322 and the outer side surface 333g of the flange part 333 is greater than that of the conventional sealing apparatus 100 (Fig. 5).

Due to this, since the lubricant G1 that is caused to adhere between the thin inner peripheral surface 322us of the thin distal end part 322p of the main lip 322 and the outer side surface 333g of the flange part 333 by virtue of the surface tension is efficiently discharged to the engine interior A side altogether by the pumping effect, the lubricant G1 can be prevented from remaining in the space S.

Thus, in the oil seal 3000, even when the engine speed becomes a predetermined rotational speed or faster, the shaking off action of the lubricant G1 by virtue of the centrifugal force of the flange part 333 and the thread action of returning the lubricant G1 to the engine interior A side by the thread grooves 334 work effectively.

That is, in the oil seal 3000, the pumping effect of returning the lubricant G1 that oozes from the engine interior A side into the space S from the space S to the engine interior A side with good efficiency within a short period of time can be exhibited sufficiently. Thus, with the oil seal 3000, even though the lubricant G1 in the engine interior A oozes into the space S, a result of the lubricant G1 remaining in the space S to thereby leak from the space S to the engine exterior B can be reduced remarkably.

Further, in the oil seal 3000, since the thin distal end part 322p of the main lip 322 has the shape thinner than the main body of the main lip 322 as if the the outer peripheral surface 322g of the main lip 322 is cut out, the thin distal end part 322p bends easily with the interference that is smaller than that of the conventional one. Since this allows the thin inner peripheral surface 322us of the thin distal end part 322p to tightly contact the outer side surface 333g of the flange part 333 to thereby close the thread grooves 334, not only can a stationary leakage be prevented, but also the sliding resistance of the main lip 322 can be reduced.

### <Example>

In the oil seal 3000 of the present invention, when the thin distal end part 322p of the main lip 322 is brought into abutment with the flange part 333 of the slinger 30 with an arbitrary interference, as illustrated in Fig. 14, a distance from the distal-most end face 322e of the thin distal end part 322p to, for example, a center position of the curved surface 322w where the thin distal end part 332p bends (hereinafter, also referred to as a "bending distance") is specified as L. In Fig. 14, a solid line indicates the main lip 322 where the thin distal end part 322p is formed, while a broken line indicates the conventional main lip where no thin distal end part 322p is formed. However, the present invention is not limited to this configuration, and hence, a distance from the distal-most end face 322e of the thin distal end part 322p to the cut-out position 322c may be specified as the bending distance L, or a distance from the distal-most end face 322e of the thin distal end part 322p to a boundary point between the thin outer peripheral surface 322gt and the curved surface 322w may be specified as the bending distance L.

Here, Fig. 15 shows a relationship between a maximum value of an interference with which the thin inner peripheral surface 322us of the thin distal end part 322p does not rise from the outer side surface 333g when the thin inner peripheral surface 322us of the thin distal end part 322p of the main lip 322 is brought into abutment with the outer side surface 333g of the flange part 333 of the slinger 30 and the bending distance L of the thin distal end part 322p.

Here, when the bending distance L is referred to as "0", this means that the main lip (broken line) constitutes the conventional main lip where no thin distal end part 322p exists. In addition, when the bending distance L [mm] increases step by step in installments of "0.5", "1", "1.5", this means that the distance from the distal-most end face 322e of the main lip 322 to the center position of the curved surface 322w of the thin distal end part 322p changes. That is, a graph shown in Fig. 15 indicates that as the bending distance L [mm] increases more, that is, as the thin distal end part 322p becomes longer, the thin distal end part 322p bends easily with a smaller interference.

The fact that the bending distance L is great, and the thin distal end part 322p bends easily in the center position of the curved surface 322w means that the relative contact angle Θ1 between the thin inner peripheral surface 322us of the thin distal end part 322p of the main lip 322 and the outer side surface 333g of the flange part 333 easily becomes smaller than the conventional contact angle ΘO.

Consequently, the lubricant G1 (Fig. 13) that is caused to adhere between the thin inner peripheral surface 322us of the thin distal end part 322p of the main lip 322 and the outer side surface 333g of the flange part 333 by virtue of the surface tension is discharged altogether to the engine interior A side with good efficiency by the pumping action, whereby the lubricant G1 can be prevented from remaining in the space S.

In this way, with the oil seal 3000, even though the crankshaft 201 rotates at high speeds equal to or over the predetermined rotational speed, the relative contact angle Θ1 between the thin inner peripheral surface 322us of the thin distal end part 322p of the main lip 322 and the outer side surface 333g of the flange part 333 can easily be decreased with a small interference compared with the conventional one. As a result, the oil seal 3000 can return the lubricant G1 that oozes from the engine interior A side into the space S to the engine interior A side with good efficiency without increasing the sliding resistance of the main lip 322, thereby making it possible to prevent the lubricant G1 from being kept stored in the space S.

In this case, too, in case, similar to what is illustrated in Fig. 7(B), the length of the main lip 322 from the lip distal end to the root portion is 6 mm, the contact angle Θ1 constitutes the contact angle measured in the position lying about 1 mm away from the inner peripheral end of the contact portion at the lip distal end, 1 mm corresponding to about 17% of the length of the main lip 322, it has been found out as shown in Fig. 7 (C) that when the contact angle Θ1 becomes about 17% or smaller at the main lip 322, an air suction amount of air containing the lubricant G1 existing in the space S into the engine interior A side increases drastically.

That is, it has been found out that with the main lip 322 for use for the slinger 30 on which the thread grooves 36 are formed, the air suction amounts increase more as the relative contact angle Θ1 between the main lip 322 and the flange part 333 decreases from an angle of about 17 degrees or less.

### <Fourth Embodiment>

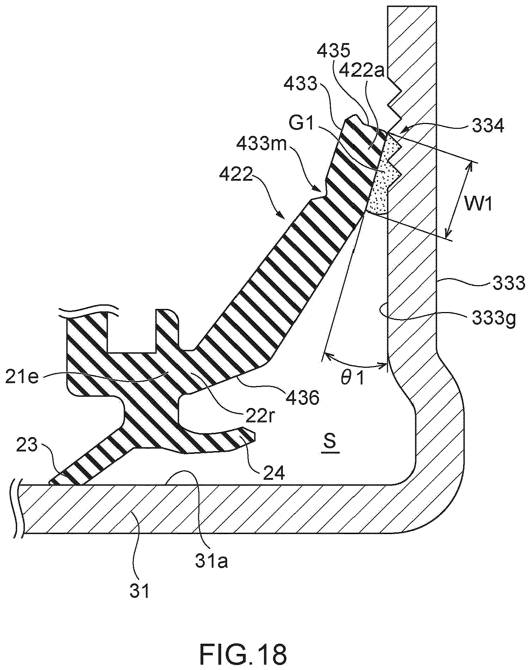

Fig. 16 is a sectional view illustrating a state where a sealing apparatus according to a fourth embodiment of the present invention is mounted. Fig. 17 is an enlarged sectional view illustrating a configuration of the sealing apparatus alone according to the fourth embodiment of the present invention. Fig. 18 is a plan view for explaining a storage amount of lubricant in accordance with a contact angle between a main lip and a flange part of a slinger in the sealing apparatus according to the fourth embodiment of the present invention.

### <Configuration of Sealing Apparatus>

As illustrated in Figs. 16 and 17, an oil seal 4000 as the sealing apparatus according to the fourth embodiment of the present invention is used as a seal for a motor vehicle engine (in particular, a gasoline engine) in which lubricant exists in an engine interior A, and is designed not only to prevent the lubricant in the engine interior A from leaking to an engine exterior B but also to prevent foreign matters such as dust from intruding from the engine exterior B into the engine interior A.

The oil seal 4000 includes a seal part 10 that is mounted in an inner peripheral surface 202a that constitutes a surface on an inner periphery side (in a direction of an arrow d) of a housing 202, and a slinger 30 that is mounted on an outer peripheral surface 201a that constitutes a surface on an outer peripheral side (in a direction of an arrow c) of a crankshaft 201 as a rotational shaft that rotates relative to the housing 202, and is formed by combining the seal part 10 and the slinger 30 together.

The seal part 10 includes a reinforcement ring 20 and an elastic body part 21 that is formed integrally with the reinforcement ring 20. A configuration of the reinforcement ring 20 is identical to that of the first embodiment, and hence, the description thereof will be omitted here as a matter of convenience.

The elastic body part 21 is attached integrally to the reinforcement ring 20 and is formed integrally with the reinforcement ring 20 in such a manner as to cover an outer side (in a direction of an arrow a), part of an outer peripheral side (in the direction of the arrow c), and an inner periphery side (in the direction of the arrow d) of the reinforcement ring 20.

The elastic body part 21 includes a lip covering part 21a, a lip covering part 21b, a lip covering part 21c, a lip covering part 21d, a lip waist part 21e, a main lip 422, a dust lip 23, and an intermediate lip 24 and differs from the elastic body parts 21 of the first to third embodiments only in the shape of the main lip 422.

The main lip 422 of the elastic body part 21 constitutes a lip portion of an annular shape centered on an axis line x which extends obliquely further inwards (in the direction of the arrow b) and towards the outer peripheral side (in the direction of the arrow c) from an end part at an inner side (in the direction of the arrow b) of the lip waist part 21e, and expands diametrically from the inner periphery side (in the direction of the arrow d) towards the outer peripheral side (in the direction of the arrow c).

The main lip 422 is formed so that a thickness of a root portion 22r that extends from an end part on the inner side (in the direction of the arrow b) of the lip waist part 21e is thinner than a thickness of a main lip main body. This is because the main lip 422 easily bends from the root at the root portion 22r as a starting point in the elastic body part 21. In this description, the main lip 422 of this type may be referred to as a thin lip from time to time. However, the present invention is not limited to this configuration, and hence, the main lip 422 may be formed so that the thickness of the root portion 22r is almost the same as the thickness of the main lip main body or the thickness of the root portion 22r is thicker than the thickness of the main lip main body.

The main lip 422 is defined by an outer peripheral surface 433 constituting a surface on the outer peripheral side (in the direction of the arrow c), an inner peripheral surface 434 constituting a surface on the inner periphery side (in the direction of the arrow d), a distal-most end face 435, and an inner peripheral base end surface 436.

The outer peripheral surface 433 constitutes a flat surface extending from the root portion 22r to the distal-most end face 435 and has a cut-in part 433m of an annular shape that is provided at an arbitrary location at a tip end side. The cut-in part 433m has a substantially V-shaped cross section. However, a bottom portion of the cut-in part 433m is formed not into an acute angle like a vertex of a triangle but into a rounded arc-like shape. The cross-sectional shape of the cut-in part 433m is not limited to the V-like shape and hence may be a substantially U-shaped cross section. Specifically, the cut-in part 433m is formed in a position lying by a predetermined length (for example, of the order of 1mm) away from the distal-most end face 435 towards the root portion 22r.

In this case, the main lip 422 has a distal end portion 422a that contacts an outer side surface 333g of a flange part 333 in a position lying further towards a lip tip end side than the cut-in part 433m formed on the outer peripheral surface 433 defining the main lip 422 to thereby bend.

The inner peripheral surface 434 constitutes not only a flat surface that extends almost parallel to the outer peripheral surface 433 and in such a manner as to slightly move away from the outer peripheral surface 433 from the distal-most end face 435 to the inner peripheral base end surface 436 but also a contact surface that contacts the outer side surface 333g of the flange part 333 of the slinger 30 which will be described later. However, the present invention is not limited to this configuration, and hence, the inner peripheral surface 434 may be almost parallel to the outer peripheral surface 433 or may constitute a flat surface that is inclined in such a manner that a width defined between the outer peripheral surface 433 and itself narrows towards the inner peripheral base end surface 436.

The inner peripheral surface 434 has a contact surface 434s configured to contact the outer side surface 333g of the flange part 333 when the main lip 422 is pressed against the outer side surface 333g of the flange part 333 with a predetermined interference whereby the distal end portion 422a bends from the cut-in part 433m and a non-contact surface 434k that does not contact the outer side surface 333g of the flange part 333.

The distal-most end face 435 constitutes a distal-most end face of the main lip 422 and a substantially flat surface that is almost perpendicular to the outer peripheral surface 433 and the inner peripheral surface 434. However, the present invention is not limited to this configuration, and hence, the distal-most end face 435 may be a rounded curved surface.

The inner peripheral base end surface 436 constitutes a flat surface that continues from the inner peripheral surface 434 to the lip waist part 21e while being bent through a vertex 436P. A thickness between the outer peripheral surface 433 and the inner peripheral base end surface 436 decreases gradually towards the lip waist part 21e, terminating at the root portion 22r.

Configurations of the dust lip 23 and the intermediate lip 24 of the elastic body part 21 are identical to those of the first embodiment, and hence, the description thereof will be omitted here.

The slinger 30 is, for example, a metallic plate-shaped member configured to rotate in association with rotation of the crankshaft 201 in such a state that the slinger 30 is mounted on the outer peripheral surface 201a of the crankshaft 201, and includes a cylindrical part 31, and the flange part 333. The slinger 30 can be formed by bending, for example, a plate-shaped member. The cylindrical part 31 and the flange part 333 are also identical to those of the third embodiment described above.

In the oil seal 4000, the distal end portion 422a of the main lip 422 of the elastic body part 21 slidably tightly contacts the outer side surface 333g constituting an end face on the engine exterior B side of a disc portion 333a of the flange part 333 in the axial direction, whereby lubricant (oil) existing in the engine interior A is prevented from leaking to the engine exterior B.

In this oil seal 4000, four spiral groove-shaped thread grooves 334 are provided at an end part area of the outer side surface 333g of the disc portion 333a of the flange part 333 that the distal end portion 422a of the main lip 422 slidably tightly contacts for use in discharging lubricant G1 (Fig. 18) that intrudes into a space S to the engine exterior side A. A configuration of the thread grooves 334 is identical to that described in the third embodiment.

As described above, since the distal end portion 422a of the main lip 422 bends outwards (in the direction of the arrow a) around a center of the cut-in part 433m as a bending point due to the cut-in part 433m having the annular shape being formed on the outer peripheral surface 433, and a relative contact angle Θ1 (Fig. 18) when the distal end portion 422a of the main lip 422 contacts the outer side surface 333g of the flange part 333 becomes smaller than the conventional contact angle θ0 (Fig. 5).

In this case, since a contact area between the distal end portion 422a of the main lip 422 and the outer side surface 333g of the flange part 333 is increased by such an extent that the contact angle Θ1 is smaller than the conventional contact angle θ0, it becomes easy to maintain the sealing properties.

In this way, the oil seal 4000 has the structure in which the main lip 422 of the elastic body part 21 that contacts the outer side surface 333g of the flange part 333 of the slinger 30 is disposed on the engine interior A side to thereby prevent the lubricant from oozing out, and the dust lip 23 of the elastic body part 21 that contacts the outer peripheral surface 31a of the cylindrical part 31 of the slinger 30 is disposed on the engine exterior B side to prevent not only dust from intruding from the engine exterior B side but also lubricant from leaking out to the engine exterior B side.

Incidentally, a hub seal that is generally used in a hub bearing has a structure in which a side lip (corresponding to the main lip 422) of an elastic body part that contacts a flange part of a slinger is disposed on an engine exterior B side to prevent dust from intruding and a radial lip (corresponding to the dust lip 23) that contacts a cylindrical part of the slinger is disposed on an engine interior A side to prevent lubricant from leaking.

That is, in the oil seal 4000 of the present invention, compared with the hub seal for use in the hub bearing, the main lip 422 that contacts the slinger 30 is disposed totally opposite and the role thereof is also opposite, and therefore, the oil seal 4000 has the seal structure that basically differs from that of the hub seal.

In the oil seal 4000 configured in the way described above, the annular closed space S (Fig. 18), which is centered on the axis line x, is formed by the main lip 422 and the dust lip 23 of the elastic body part 21, and the outer peripheral surface 31a of the cylindrical part 31 and the outer side surface 333g of the flange part 333 of the slinger 30.

This space S constitutes a space where to store the lubricant G1 (Fig. 18) that oozes along the gap between the outer side surface 333g of the flange part 333 of the slinger 30 and the distal end portion 422a of the main lip 422 from the engine interior A side into the space S. The lubricant G1 that is stored in this space S is restrained from leaking to the engine exterior B side by the existence of the dust lip 23.

### <Operation and Effect>

In the configuration that has been described heretofore, the oil seal 4000 of the fourth embodiment is mounted by the seal part 10 being press fitted in the inner peripheral surface 202a of the housing 202 to be fixed thereto and the slinger 30 being press fitted on the outer peripheral surface 201a of the crankshaft 201 to be fixed thereto.

As this occurs, the dust lip 23 of the elastic body part 21 of the seal part 10 is caused to contact the outer peripheral surface 31a of the cylindrical part 31 of the slinger 30 with the predetermined interference, and the main lip 422 of the elastic body part 21 is caused to contact the outer side surface 333g of the flange part 333 of the slinger 30 with the predetermined interference. At this time, in the main lip 422, since the cut-in part 433m is provided on the outer peripheral surface 433, the distal end portion 422a of the main lip 422 is bent slightly outwards (in the direction of the arrow a) around the center of the cut-in part 433m as a bending point.

In this case, the seal part 10 and the slinger 30 are assembled together so that the contact surface 434s of the distal end portion 422a of the main lip 422 contacts any of the four thread grooves 334 without any fail.

In the oil seal 4000, which is made up of the seal part 10 and the slinger 30 that are assembled and attached together as described above, the slinger 30 rotates leftwards (counterclockwise) as the crankshaft 201 rotates.

At this time, the oil seal 4000 can move the lubricant G1 that has oozed into the space S from the inner periphery side (in the direction of the arrow d) to the outer peripheral side (in the direction of the arrow c) as a result of the effect of the four thread grooves 334 that are formed on the end part area on the outer peripheral side (in the direction of the arrow c) of the flange part 333 and can suck the lubricant G1 from the gap between the outer side surface 333g of the flange part 333 and the contact surface 434s of the distal end portion 422a of the main lip 422 into the engine interior A side, whereby the lubricant G1 is discharged (the thread action). That is, the thread grooves 334 have the oil discharging operation of sucking the lubricant G1 from the space S to the engine interior A side for discharge as its function. In other words, the thread grooves 334 configured to perform the discharging operation of returning the lubricant to the engine interior side of the housing 202 when the crankshaft 201 rotates are formed at the portion on the outer side surface 333a of the flange part 333 that contacts the main lip 422.

Since the oil seal 4000 can receive the lubricant G1 that oozes into the space S by the existence of the intermediate lip 24 of the elastic body part 21, the oil seal 4000 can suck out the lubricant G1 that intrudes into the space S to the engine interior A side while preventing the lubricant G1 from arriving directly at the dust lip 23.

In addition, the oil seal 4000 can move the lubricant G1 inside the space S from the inner periphery side (in the direction of the arrow d) towards the outer peripheral side (in the direction of the arrow c) by virtue of the centrifugal force generated in association with rotation of the flange part 333 of the slinger 30 and discharge the lubricant G1 from the gap between the outer side surface 333g of the flange part 333 and the contact surface 434s of the distal end portion 422a of the main lip 422 to the engine interior A side while shaking off the lubricant G1 (the shaking off action).

That is, the oil seal 4000 can perform a pumping effect of sucking the lubricant G1 existing in the space S into the engine interior A to discharge the lubricant G1 by use of the thread action on the lubricant G1 in the space S by the effect of the thread grooves 334 and the shaking off action on the lubricant G1 in the space S by the centrifugal force of the flange part 333.

As illustrated in Fig. 5, the related art sealing apparatus 100 (Fig. 19) has the relative contact angle θ0 between the inner side surface 111u constituting the inner surface of the main lip 111 and the outer side surface 103a of the flange part 103. Compared with this, as illustrated in Fig. 18, in the oil seal 4000 of the present invention, the relative contact angle Θ1 between the contact surface 434s of the distal end portion 422a of the main lip 422 and the outer side surface 333g of the flange part 333 is smaller (θ0 > θ1). That is, a narrowing and miniaturizing structure configured to make small the relative contact angle Θ1 formed by the flange part 333 and the main lip 422 when the outer side surface 333g of the flange part 333 contacts the main lip 422 is formed between the flange part 333 and the main lip 422.

In the conventional sealing apparatus 100, since the contact angle θ0 between the main lip 111 and the flange part 103 is great, an amount of lubricant GO that is caused to adhere between the inner side surface 111u of the main lip 111 and the outer side surface 103a of the flange part 103 by virtue of the surface tension is small. Due to this, even though the pumping effect works, all the lubricant G0 that intrudes into the space S is not discharged to the engine interior A side with good efficiency, and hence, part of the lubricant G0 remains in the space S.

In contrast with this, in the oil seal 4000 of the present invention, the relative contact angle Θ1 between the contact surface 434s of the distal end portion 422a of the main lip 422 and the outer side surface 333g of the flange part 333 is smaller than the conventional contact angle θ0. Due to this, an amount of lubricant G1 that is caused to adhere to be stored between the contact surface 434s of the distal end portion 422a of the main lip 422 and the outer side surface 333g of the flange part 333 by virtue of the surface tension is greater than that of the conventional one.

That is, an adhering surface area of the lubricant G1 that is caused to adhere to the contact surface 434s of the distal end portion 422a of the main lip 422 and the outer side surface 333g of the flange part 333 is greater than that of the conventional one. Specifically, an adhering width W1 of the lubricant G1 that is caused to adhere to the contact surface 434s of the distal end portion 422a of the main lip 422 and the outer side surface 333g of the flange part 333 is greater than that of the conventional sealing apparatus 100 (Fig. 5).

Due to this, since the lubricant G1 that is caused to adhere between the contact surface 434s of the distal end portion 422a of the main lip 422 and the outer side surface 333g of the flange part 333 by virtue of the surface tension is discharged to the engine interior A side altogether by the pumping effect, the lubricant G1 can be prevented from remaining in the space S.

Thus, in the oil seal 4000, even when the engine speed becomes faster than a predetermined rotational speed or faster, the shaking off action of the lubricant G1 by virtue of the centrifugal force of the flange part 333 and the thread action of returning the lubricant G1 to the engine interior A side by the thread grooves 334 work effectively.

That is, in the oil seal 4000, the pumping effect of returning the lubricant G1 that oozes from the engine interior A side into the space S from the space S to the engine interior A side with good efficiency within a short period of time can be exhibited sufficiently. Thus, with the oil seal 4000, even though the lubricant G1 in the engine interior A oozes into the space S, a result of the lubricant G1 remaining in the space S to thereby leak from the space S to the engine exterior B can be reduced remarkably.

Further, in the oil seal 4000, since the distal end portion 422a of the main lip 422 bends easily with the smaller interference than that in the conventional one due to the existence of the cut-in part 433m. Since this allows the contact surface 434s of the distal end portion 422a of the main lip 422 to tightly contact the outer side surface 333g of the flange part 333 to thereby close the thread grooves 334, not only can a stationary leakage be prevented, but also the sliding resistance of the main lip 422 can be reduced.

In this case, too, in case, similar to what is illustrated in Fig. 7(B), the length of the main lip 422 from the lip distal end to the root portion 22r is 6 mm, the contact angle Θ1 constitutes the contact angle measured in the position lying about 1 mm away from the inner peripheral end of the contact portion of the contact width at the distal end portion 422a, 1 mm corresponding to about 17% of the length, it has been found out as shown in Fig. 7 (C) that when the contact angle Θ1 becomes about 17 degrees or smaller at the main lip 422, an air suction amount of air containing the lubricant G1 existing in the space S into the engine interior A side increases drastically.

That is, it has been found out that with the main lip 422 for use for the slinger 30 on which the thread grooves 36 are formed, the air suction amounts increase more as the relative contact angle Θ1 between the main lip 422 and the flange part 333 decreases from an angle of about 17 degrees or less.

### <Other Embodiments>

In the first, second and fourth embodiments that have been described heretofore, while the thin lip in which the thickness of the root portion 22r is thinner than the thickness of the main body portion is described as being used as the main lips 22, 422, the present invention is not limited to this configuration, and hence, the thickness of the root portion 22r may be equal to or thicker than the thickness of the main body portion.

Thus, while the preferred embodiments of the present invention have been described, the present invention is not limited to the oil seals 1, 2000, 3000, 4000 according to the first to fourth embodiments of the present invention but includes all forms that are included in the scope of the appended claims. In addition, the configurations may be combined selectively as required in order to solve or provide at least part of the above-described problems or the effects. For example, the shapes, materials, dispositions, sizes and the like of the constituent elements in the embodiments described above can be modified as required in accordance with the specific forms to which the present invention is applied. Specifically, forms based on every possible combination are included, the combination including a combination of the flange part 33 having the inclined flange portion 35 and the main lip 322 having the thin distal end part 322p, a combination of the flange part 33 and the main lip 422 on which the cut-in part 433m is provided, a combination of the flange part 33 and the main lip 522 having the lip curved part 522w, a combination of a main lip on which both the thin distal end part 322p and the cut-in part 433m are provided, the curved flange part 133 and the main lip 322, the main lip 422, or the main lip 522, and the like.

While the oil seals 1, 2000, 3000, 4000 as the sealing apparatuses according to the first to fourth embodiments are described as being used as the seal for the motor vehicle engine, the application targets of the sealing apparatus according to the present invention are not limited thereto, and hence, the present invention can be applied to all configurations that can make use of the advantageous effects provided by the scope of the appended claims, such as other general-purpose machinery, industrial machinery, and the like.

### List of Reference Signs

1, 2000, 3000, 4000···oil seal, 10, 102···seal part, 20···reinforcement ring, 21··· elastic body part, 22, 111, 322, 422 . . . main lip, 23 dust lip, 24··intermediate lip, 30, 101 ···slinger, 31···cylindrical part, 31a···outer peripheral surface, 33, 103, 333 ···flange part, 34···vertical flange part, 35···inclined flange part, 35a···outer side surface, 36, 334···thread groove (groove), 37···radial groove (groove), 38··· inclined groove (groove), 201···crankshaft (rotational shaft), 202···housing, S··· space, A···engine interior, B···engine exterior

## Claims

1. A sealing apparatus (1) comprising:
a slinger (30) having a cylindrical part (31) configured to be mounted on an outer peripheral surface of a rotational shaft that rotates relative to a housing and an annular flange part (33) comprising a flange portion (34) that extends from an inner end part of the cylindrical part (31) in a direction that is perpendicular to an axis (x) of the rotational shaft, and an inclined flange portion (35) that extends from an end part on the outer peripheral side of the flange portion (34), and is formed integrally with the vertical flange portion (34); and
a seal part (10) configured to be mounted on the housing and having a main lip (22) configured to contact slidably an outer side surface (35a) of the flange part (33) of the slinger (30) to thereby seal lubricant inside an engine interior of the housing, wherein
a groove (36) configured to exhibit a discharging action of returning the lubricant to the engine interior side of the housing when the rotational shaft rotates is formed at a part on the outer side surface (35a) of the flange part (33) that contacts the main lip (22),
**characterized in that** a narrowing and miniaturizing structure configured to reduce a relative contact angle (θ1) that is formed by the flange part (33) and the main lip (22) when the outer side surface (35a) of the flange part (33) contacts the main lip (22) is formed between the flange part (33) and the main lip (22),
the contact angle (θ1) is 17 degrees or smaller, and
the narrowing and miniaturizing structure is formed by the inclined flange part (35) where the flange part (33) of the slinger (30) is inclined and by the main lip (22).

2. A sealing apparatus (2000) comprising:
a slinger (130) having a cylindrical part (131) configured to be mounted on an outer peripheral surface of a rotational shaft that rotates relative to a housing and an annular flange part (133) that extends from an inner end part of the cylindrical part (131) in a direction that is perpendicular to an axis (x) of the rotational shaft; and
a seal part (10) configured to be mounted on the housing and having a main lip (22) configured to contact slidably an outer side surface (133a) of the flange part (133) of the slinger (130) to thereby seal lubricant inside an engine interior of the housing, wherein
a groove (36) configured to exhibit a discharging action of returning the lubricant to the engine interior side of the housing when the rotational shaft rotates is formed at a part on the outer side surface (133a) of the flange part (133) that contacts the main lip (22),
**characterized in that** a narrowing and miniaturizing structure configured to reduce a relative contact angle (θ1) that is formed by the flange part (133) and the main lip (22) when the outer side surface (133a) of the flange part (133) contacts the main lip (22) is formed between the flange part (133) and the main lip (22), and
the narrowing and miniaturizing structure is formed by a curved flange part (133m, 133s) where the flange part (133) of the slinger (130) is curved and by the main lip (22).

3. A sealing apparatus (3000) comprising:
a slinger (30) having a cylindrical part (31) configured to be mounted on an outer peripheral surface of a rotational shaft that rotates relative to a housing and an annular flange part (333) that extends from an inner end part of the cylindrical part (31) in a direction that is perpendicular to an axis (x) of the rotational shaft; and
a seal part (10) configured to be mounted on the housing and having a main lip (322) configured to contact slidably an outer side surface (333g) of the flange part (333) of the slinger (30) to thereby seal lubricant inside an engine interior of the housing, wherein
a groove (334) configured to exhibit a discharging action of returning the lubricant to the engine interior side of the housing when the rotational shaft rotates is formed at a part on the outer side surface (333g) of the flange part (333) that contacts the main lip (322),
**characterized in that** a narrowing and miniaturizing structure configured to reduce a relative contact angle (θ1) that is formed by the flange part (333) and the main lip (322) when the outer side surface (333g) of the flange part (333) contacts the main lip (322) is formed between the flange part (333) and the main lip (22),
the narrowing and miniaturizing structure is formed by a thin distal end part (322p), the thin distal end part (322p) being formed thinner in thickness than a main lip main body (322) at a lip tip end side where the main lip (322) contacts the outer side surface (333g) of the flange part (333), and by the slinger (30),
the thin distal end part (322p) includes a curved surface (322w) and a thin outer peripheral surface (322gt),
the curved surface (322w) constitutes a surface that is curved in an arc-like shape and that continues from an outer peripheral surface (322g) of the main lip (322) to a distal-most end face (322e) that is an end surface at a distalmost end of the main lip (322), and
the thin outer peripheral surface (322gt) constitutes a surface that continues smoothly from the curved surface (322w) to the distal-most end face (322e).

4. A sealing apparatus (4000) comprising:
a slinger (30) having a cylindrical part (31) configured to be mounted on an outer peripheral surface of a rotational shaft that rotates relative to a housing and an annular flange part (333) that extends from an inner end part of the cylindrical part (31) in a direction that is perpendicular to an axis (x) of the rotational shaft; and
a seal part (10) configured to be mounted on the housing and having a main lip (422) configured to contact slidably an outer side surface (333g) of the flange part (333) of the slinger (30) to thereby seal lubricant inside an engine interior of the housing, wherein
a groove (334) configured to exhibit a discharging action of returning the lubricant to the engine interior side of the housing when the rotational shaft rotates is formed at a part on the outer side surface (333g) of the flange part (333) that contacts the main lip (422),
**characterized in that** a narrowing and miniaturizing structure configured to reduce a relative contact angle (θ1) that is formed by the flange part (333) and the main lip (422) when the outer side surface (333g) of the flange part (333) contacts the main lip (422) is formed between the flange part (333) and by the main lip (422),
a cut-in part (433m) is formed on an outer peripheral surface (433) of the main lip (422), and
the narrowing and miniaturizing structure is formed by a distal end portion, the distal end portion being a portion further on a lip tip end side than the cut-in part (433m) in the main lip (422) and configured to contact the outer side surface (333g) of the flange part (333) so that the distal end portion is bent by the cut-in part (433m), and the main lip.

5. The sealing apparatus (1) according to claim 1, **characterized in that** the flange part (33) of the slinger (30) includes a vertical flange part (34) and the inclined flange part (35),
wherein the inclined flange part (35) is inclined towards an inner side and an outer peripheral side from an end part on the outer peripheral side of the vertical flange part (34), and the vertical flange part (34) expands from an end part on the inner side of the cylindrical part (31) towards the outer peripheral side in a radial direction that is perpendicular to the axis (x).

6. The sealing apparatus (2000) according to claim 2, **characterized in that** the flange part (133) of the slinger (130) includes a small-radius flange portion (133m) and a large-radius flange portion (133s) as the curved flange part (133s), and
the large-radius flange portion (133s) has a radius of curvature which is larger than a radius of curvature of the small-radius flange portion (133m).

## Patentansprüche

1. Dichtungsvorrichtung (1), welche aufweist:
einen Slinger (30) mit einem zylindrischen Teil (31), das konfiguriert ist, um an einer Außenumfangsfläche einer Drehwelle angebracht zu werden, die sich relativ zu einem Gehäuse dreht, sowie einem ringförmigen Flanschteil (33), das einen Flanschabschnitt (34) aufweist, der sich von einem inneren Endteil des zylindrischen Teils (31) in einer Richtung erstreckt, die senkrecht zu einer Achse (x) der Drehwelle ist, sowie einen schrägen Flanschabschnitt (35), der sich von einem Endteil an der Außenumfangsseite des Flanschabschnitts (34) erstreckt und integriert mit dem vertikalen Flanschabschnitt (34) ausgebildet ist; und
ein Dichtungsteil (10), das konfiguriert ist, um an dem Gehäuse angebracht zu werden, und eine Hauptlippe (22) aufweist, die konfiguriert ist, um eine Außenseitenfläche (35a) des Flanschteils (33) des Slingers (30) gleitend zu kontaktieren, um hierdurch Schmiermittel innerhalb eines Motorinnenraums des Gehäuses abzudichten, wobei
eine Nut (36), die konfiguriert ist, um eine Entladeaktion zum Zurückbringen des Schmiermittels zu der Motorinnenraumseite des Gehäuses auszuüben, wenn sich die Drehwelle dreht, an einem Teil an der Außenseitenfläche (35a) des Flanschteils (33), das die Hauptlippe (22) kontaktiert, ausgebildet ist,
**dadurch gekennzeichnet, dass** eine verengende und verkleinernde Struktur, die konfiguriert ist, um einen relativen Kontaktwinkel (Θ1) zu reduzieren, der durch das Flanschteil (33) und die Hauptlippe (22) gebildet ist, wenn die Außenseitenfläche (35a) des Flanschteils (33) die Hauptlippe (22) kontaktiert, zwischen dem Flanschteil (33) und der Hauptlippe (22) ausgebildet ist,
der Kontaktwinkel (Θ1) 17 Grad oder kleiner ist, und
die verengende und verkleinernde Struktur durch das schräge Flanschteil (35), wo das Flanschteil (33) des Slingers (30) geneigt ist, und durch die Hauptlippe (22) gebildet ist.

2. Dichtungsvorrichtung (2000), welche aufweist:
einen Slinger (130) mit einem zylindrischen Teil (131), das konfiguriert ist, um an einer Außenumfangsfläche einer Drehwelle angebracht zu werden, die sich relativ zu einem Gehäuse dreht, sowie einem ringförmigen Flanschteil (133), das sich von einem inneren Endteil des zylindrischen Teils (131) in einer Richtung erstreckt, die senkrecht zu einer Achse (x) der Drehwelle ist; und
ein Dichtungsteil (10), das konfiguriert ist, um an dem Gehäuse angebracht zu werden und eine Hauptlippe (22) aufweist, die konfiguriert ist, um eine Außenseitenfläche (133a) des Flanschteils (133) des Slingers (130) gleitend zu kontaktieren, um hierdurch Schmiermittel innerhalb eines Motorinnenraums des Gehäuses abzudichten, wobei
eine Nut (36), die konfiguriert ist, um eine Entladeaktion zum Zurückbringen des Schmiermittels zu der Motorrauminnenseite des Gehäuses auszuüben, wenn sich die Drehwelle dreht, an einem Teil an der Außenseitenfläche (133a) des Flanschteils (133), das die Hauptlippe (22) kontaktiert, ausgebildet ist,
**dadurch gekennzeichnet, dass** eine verengende und verkleinernde Struktur, die konfiguriert ist, um einen relativen Kontaktwinkel (Θ1) zu reduzieren, der durch das Flanschteil (133) und die Hauptlippe (22) gebildet ist, wenn die Außenseitenfläche (133a) des Flanschteils (133) die Hauptlippe (22) kontaktiert, zwischen dem Flanschteil (133) und der Hauptlippe (22) ausgebildet ist, und
die verengende und verkleinernde Struktur durch ein gekrümmtes Flanschteil (133m, 133s), wo das Flanschteil (133) des Slingers (130) gekrümmt ist, und durch die Hauptlippe (22) gebildet ist.

3. Dichtungsvorrichtung (3000), welche aufweist:
einen Slinger (30) mit einem zylindrischen Teil (31), das konfiguriert ist, um an einer Außenumfangsfläche einer Drehwelle angebracht zu werden, die sich relativ zu einem Gehäuse dreht, sowie einem ringförmigen Flanschteil (333), das sich von einem inneren Endteil des zylindrischen Teils (31) in einer Richtung erstreckt, die senkrecht zu einer Achse (x) der Drehwelle ist; und
ein Dichtungsteil (10), das konfiguriert ist, um an dem Gehäuse angebracht zu werden und eine Hauptlippe (322) aufweist, die konfiguriert ist, um eine Außenseitenfläche (333g) des Flanschteils (333) des Slingers (30) gleitend zu kontaktieren, um hierdurch Schmiermittel innerhalb eines Motorinnenraums des Gehäuses abzudichten, wobei
eine Nut (334), die konfiguriert ist, um eine Entladeaktion zum Zurückbringen des Schmiermittels zu der Motorinnenraumseite des Gehäuses auszuüben, wenn sich die Drehwelle dreht, an einem Teil an der Außenseitenfläche (333g) des Flanschteils (333), das die Hauptlippe (322) kontaktiert, ausgebildet ist,
**dadurch gekennzeichnet, dass** eine verengende und verkleinernde Struktur, die konfiguriert ist, um einen relativen Kontaktwinkel (Θ1) zu reduzieren, der durch das Flanschteil (333) und die Hauptlippe (322) gebildet ist, wenn die Außenseitenfläche (333g) des Flanschteils (333) die Hauptlippe (322) kontaktiert, zwischen dem Flanschteil (333) und der Hauptlippe (322) ausgebildet ist,
die verengende und verkleinernde Struktur durch ein dünnes distales Endteil (322p), wobei das dünne distale Endteil (322p) in der Dicke dünner ausgebildet ist als ein Hauptlippenhauptkörper (322) an einer Lippenspitzenendseite, wo die Hauptlippe (322) die Außenseitenfläche (333g) des Flanschteils (333) kontaktiert, und durch den Slinger (30) gebildet ist,
das dünne distale Endteil (322p) eine gekrümmte Fläche (322w) und eine dünne Außenumfangsfläche (322gt) enthält,
die gekrümmte Fläche (322w) eine Oberfläche darstellt, die in einer bogenartigen Form gekrümmt ist und die sich von einer Außenumfangsfläche (322g) der Hauptlippe (322) zu der äußerst distalen Endfläche (322e) fortsetzt, welche eine Endfläche am äußerst distalen Ende der Hauptlippe (322) ist, und
die dünne Außenumfangsfläche (322gt) eine Oberfläche darstellt, die sich glattgängig von der gekrümmten Fläche (322w) zu der äußerst distalen Endfläche (322e) anschließt.

4. Dichtungsvorrichtung (4000), welche aufweist:
einen Slinger (30) mit einem zylindrischen Teil (31), das konfiguriert ist, um an einer Außenumfangsfläche einer Drehwelle angebracht zu werden, die sich relativ zu einem Gehäuse dreht, sowie einem ringförmigen Flanschteil (333), das sich von einem inneren Endteil des zylindrischen Teils (31) in einer Richtung erstreckt, die senkrecht zu einer Achse (x) der Drehwelle ist; und
ein Dichtungsteil (10), das konfiguriert ist, um an dem Gehäuse angebracht zu werden und eine Hauptlippe (422) aufweist, die konfiguriert ist, um eine Außenseitenfläche (333g) des Flanschteils (333) des Slingers (30) gleitend zu kontaktieren, um hierdurch Schmiermittel innerhalb eines Motorinnenraums des Gehäuses abzudichten, wobei
eine Nut (334), die konfiguriert ist, um eine Entladeaktion zum Zurückbringen des Schmiermittels zu der Motorinnenraumseite des Gehäuses auszuüben, wenn sich die Drehwelle dreht, einem Teil an der Außenseitenfläche (333g) des Flanschteils (333), das die Hauptlippe (422) kontaktiert, ausgebildet ist,
**dadurch gekennzeichnet, dass** eine verengende und verkleinernde Struktur, die konfiguriert ist, um einen relativen Kontaktwinkel (Θ1) zu reduzieren, der durch das Flanschteil (333) und die Hauptlippe (422) gebildet ist, wenn die Außenseitenfläche (333g) des Flanschteils (333) die Hauptlippe (422) kontaktiert, zwischen dem Flanschteil (333) und der Hauptlippe (422) ausgebildet ist,
ein Einschnittteil (433m) an einer Außenumfangsfläche (433) der Hauptlippe (422) ausgebildet ist, und
die verengende und verkleinernde Struktur durch einen distalen Endabschnitt, wobei der distale Endabschnitt ein Abschnitt weiter an einer Lippenspitzenendseite ist als das Einschnittteil (433m) in der Hauptlippe (422), und konfiguriert ist, um die Außenseitenfläche (333g) des Flanschteils (333) zu kontaktieren, so dass der distale Endabschnitt durch das Einschnittteil (433m) gebogen ist, und die Hauptlippe gebildet ist.

5. Die Dichtungsvorrichtung (1) nach Anspruch 1, **dadurch gekennzeichnet, dass** der Flanschteil (33) des Slingers (30) ein vertikales Flanschteil (34) und das schräge Flanschteil (35) enthält,
wobei das schräge Flanschteil (35) zu einer Innenseite und einer Außenumfangsseite von einem Endteil an der Außenumfangsseite des vertikalen Flanschteils (34) hin geneigt ist, und das vertikale Flanschteil (34) sich von einem Endteil der Innenseite des zylindrischen Teils (31) zu der Außenumfangsseite in einer radialen Richtung, die senkrecht zu der Achse (x) ist, aufweitet.

6. Die Dichtungsvorrichtung (2000) nach Anspruch 2, **dadurch gekennzeichnet, dass** das Flanschteil (133) des Slingers (130) einen Flanschabschnitt mit kleinem Radius (133m) und einen Flanschabschnitt (133s) mit großem Radius, als das gekrümmte Flanschteil (133s), enthält, und
der Flanschabschnitt mit großem Radius (133s) einen Krümmungsradius hat, der größer ist als ein Krümmungsradius des Flanschabschnitts mit kleinem Radius (133m).

## Revendications

1. Appareil d'étanchéité (1) comprenant:
une bague (30) ayant une partie cylindrique (31) configurée pour être montée sur une surface périphérique externe d'un arbre rotatif qui tourne par rapport à un boîtier et une partie bride annulaire (33) comprenant une partie de bride (34) qui s'étend depuis une partie d'extrémité interne de la partie cylindrique (31) dans une direction qui est perpendiculaire à un axe (x) de l'arbre rotatif, et une partie de bride inclinée (35) qui s'étend à partir d'une partie d'extrémité sur le côté périphérique externe de la partie de bride (34), et est formée d'une pièce avec la partie de bride verticale (34);
et
une partie d'étanchéité (10) configurée pour être montée sur le boîtier et ayant une lèvre principale (22) configurée pour entrer en contact de manière coulissante avec une surface latérale externe (35a) de la partie bride (33) de la bague (30) pour ainsi enfermer de manière étanche le lubrifiant à l'intérieur d'un intérieur de moteur du boîtier, dans lequel
une rainure (36) configurée pour présenter une action de décharge de renvoi du lubrifiant vers le côté intérieur de moteur du boîtier lorsque l'arbre rotatif tourne est formée au niveau d'une partie sur la surface latérale externe (35a) de la partie bride (33) qui est en contact avec la lèvre principale (22),
**caractérisé en ce qu'**une structure de rétrécissement et de miniaturisation configurée pour réduire un angle de contact relatif (θ1) qui est formé par la partie bride (33) et la lèvre principale (22) lorsque la surface latérale externe (35a) de la partie bride (33) entre en contact avec la lèvre principale (22) est formée entre la partie bride (33) et la lèvre principale (22),
l'angle de contact (Θ1) est de 17 degrés ou moins, et
la structure de rétrécissement et de miniaturisation est formée par la partie de bride inclinée (35) où la partie bride (33) de la bague (30) est inclinée et par la lèvre principale (22).

2. Appareil d'étanchéité (2000) comprenant:
une bague (130) ayant une partie cylindrique (131) configurée pour être montée sur une surface périphérique externe d'un arbre rotatif qui tourne par rapport à un boîtier et une partie bride annulaire (133) qui s'étend depuis une partie d'extrémité interne de la partie cylindrique (131) dans une direction qui est perpendiculaire à un axe (x) de l'arbre rotatif; et
une partie d'étanchéité (10) configurée pour être montée sur le boîtier et ayant une lèvre principale (22) configurée pour entrer en contact de manière coulissante avec une surface latérale externe (133a) de la partie bride (133) de la bague (130) pour ainsi enfermer de manière étanche le lubrifiant à l'intérieur d'un intérieur de moteur du boîtier, dans lequel
une rainure (36) configurée pour présenter une action de décharge de renvoi du lubrifiant vers le côté intérieur de moteur du boîtier lorsque l'arbre rotatif tourne est formée au niveau d'une partie sur la surface latérale externe (133a) de la partie bride (133) qui entre en contact avec la lèvre principale (22),
**caractérisé en ce qu'**une structure de rétrécissement et de miniaturisation configurée pour réduire un angle de contact relatif (1) qui est formé par la partie bride (133) et la lèvre principale (22) lorsque la surface latérale externe (133a) de la partie bride (133) entre en contact avec la lèvre principale (22) est formée entre la partie bride (133) et la lèvre principale (22), et
la structure de rétrécissement et de miniaturisation est formée par une partie de bride incurvée (133m, 133s) où la partie bride (133) de la bague (130) est incurvée et par la lèvre principale (22).

3. Appareil d'étanchéité (3000) comprenant:
une bague (30) ayant une partie cylindrique (31) configurée pour être montée sur une surface périphérique externe d'un arbre rotatif qui tourne par rapport à un boîtier et une partie bride annulaire (333) qui s'étend depuis une partie d'extrémité interne de la partie cylindrique (31) dans une direction qui est perpendiculaire à un axe (x) de l'arbre rotatif; et
une partie d'étanchéité (10) configurée pour être montée sur le boîtier et ayant une lèvre principale (322) configurée pour entrer en contact de manière coulissante avec une surface latérale externe (333g) de la partie bride (333) de la bague (30) pour ainsi enfermer de manière étanche le lubrifiant à l'intérieur d'un intérieur de moteur du boîtier, dans lequel
une rainure (334) configurée pour présenter une action de décharge de renvoi du lubrifiant vers le côté intérieur de moteur du boîtier lorsque l'arbre rotatif tourne est formée au niveau d'une partie sur la surface latérale externe (333g) de la partie bride (333) qui entre en contact avec la lèvre principale (322),
**caractérisé en ce qu'**une structure de rétrécissement et de miniaturisation configurée pour réduire un angle de contact relatif (Θ1) qui est formé par la partie bride (333) et la lèvre principale (322) lorsque la surface latérale externe (333g) de la partie bride (333) entre en contact avec la lèvre principale (322) est formée entre la partie bride (333) et la lèvre principale (22),
la structure de rétrécissement et de miniaturisation est formée par une partie d'extrémité distale mince (322p), la partie d'extrémité distale mince (322p) étant formée plus mince en épaisseur qu'un corps principal de lèvre principale (322) d'un côté d'extrémité de pointe de lèvre où la lèvre principale (322) entre en contact avec la surface latérale externe (333g) de la partie bride (333), et par la bague (30),
la partie d'extrémité distale mince (322p) inclut une surface incurvée (322w) et une surface périphérique externe mince (322gt),
la surface incurvée (322w) constitue une surface qui est incurvée en forme d'arc et qui se poursuit depuis une surface périphérique externe (322g) de la lèvre principale (322) jusqu'à une face d'extrémité la plus distale (322e) qui est une surface d'extrémité au niveau d'une extrémité la plus distale de la lèvre principale (322), et
la surface périphérique externe mince (322gt) constitue une surface qui se poursuit régulièrement depuis la surface incurvée (322w) jusqu'à la face d'extrémité la plus distale (322e).

4. Appareil d'étanchéité (4000) comprenant:
une bague (30) ayant une partie cylindrique (31) configurée pour être montée sur une surface périphérique externe d'un arbre rotatif qui tourne par rapport à un boîtier et une partie bride annulaire (333) qui s'étend depuis une partie d'extrémité interne de la partie cylindrique (31) dans une direction qui est perpendiculaire à un axe (x) de l'arbre rotatif; et
une partie d'étanchéité (10) configurée pour être montée sur le boîtier et ayant une lèvre principale (422) configurée pour entrer en contact de manière coulissante avec une surface latérale externe (333g) de la partie bride (333) de la bride (30) pour ainsi enfermer de manière étanche le lubrifiant à l'intérieur d'un intérieur de moteur du boîtier, dans lequel
une rainure (334) configurée pour présenter une action de décharge de renvoi du lubrifiant vers le côté intérieur de moteur du boîtier lorsque l'arbre rotatif tourne est formée au niveau d'une partie sur la surface latérale externe (333g) de la partie bride (333) qui entre en contact avec la lèvre principale (422),
**caractérisé en ce qu'**une structure de rétrécissement et de miniaturisation configurée pour réduire un angle de contact relatif (Θ1) qui est formé par la partie bride (333) et la lèvre principale (422) lorsque la surface latérale externe (332g) de la partie bride (332) entre en contact avec la lèvre principale (422) est formée entre la partie bride (333) et par la lèvre principale (422),
une partie découpée (433m) est formée sur une surface périphérique externe (433) de la lèvre principale (422),
et
la structure de rétrécissement et de miniaturisation est formée par une partie d'extrémité distale, la partie d'extrémité distale étant une partie située plus loin sur un côté d'extrémité de pointe de lèvre que la partie découpée (433m) dans la lèvre principale (422) et configurée pour entrer en contact avec la surface latérale externe (333g) de la partie bride (333) de sorte que la partie d'extrémité distale est pliée par la partie découpée (433m), et la lèvre principale.

5. Appareil d'étanchéité (1) selon la revendication 1, **caractérisé en ce que** la partie bride (33) de la bague (30) inclut une partie de bride verticale (34) et la partie de bride inclinée (35),
dans lequel la partie de bride inclinée (35) est inclinée vers un côté interne et un côté périphérique externe à partir d'une partie d'extrémité sur le côté périphérique externe de la partie de bride verticale (34), et la partie de bride verticale (34) s'étend à partir d'une partie d'extrémité sur le côté interne de la partie cylindrique (31) vers le côté périphérique externe dans une direction radiale qui est perpendiculaire à l'axe (x).

6. Appareil d'étanchéité (2000) selon la revendication 2, **caractérisé en ce que** la partie bride (133) de la bague (130) inclut une partie de bride à petit rayon (133m) et une partie de bride à grand rayon (133s) comme partie de bride incurvée (133s), et
la partie de bride à grand rayon (133s) a un rayon de courbure qui est plus grand qu'un rayon de courbure de la partie de bride à petit rayon (133m).
